(19) Europäisches Patentamt / European Patent Office / Office européen des brevets

(11) **EP 2 140 403 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(21) Anmeldenummer: **08749049.6**

(22) Anmeldetag: **22.04.2008**

(51) Int Cl.:
*G06K 9/46* *(2006.01)*          *G06T 7/40* *(2006.01)*

(86) Internationale Anmeldenummer:
**PCT/EP2008/003233**

(87) Internationale Veröffentlichungsnummer:
**WO 2008/128759 (30.10.2008 Gazette 2008/44)**

(54) **VORRICHTUNG UND VERFAHREN ZUM BESTIMMEN EINES KANTEN-HISTOGRAMMS, VORRICHTUNG UND VERFAHREN ZUM ABLEGEN EINES BILDES IN EINER BILDDATENBANK, VORRICHTUNG UND VERFAHREN ZUM AUFFINDEN VON ZWEI ÄHNLICHEN BILDERN UND COMPUTERPROGRAMM**

DEVICE AND METHOD FOR DETERMINING AN EDGE HISTOGRAM, DEVICE AND METHOD FOR STORING AN IMAGE IN AN IMAGE DATABASE, DEVICE AND METHOD FOR FINDING TWO SIMILAR IMAGES AND COMPUTER PROGRAM

DISPOSITIF ET PROCÉDÉ POUR DÉTERMINER UN HISTOGRAMME DE CÔTÉS, DISPOSITIF ET PROCÉDÉ DE CLASSEMENT D'UNE IMAGE DANS UNE BASE D'IMAGES DE DONNÉES, DISPOSITIF ET PROCÉDÉ POUR TROUVER DEUX IMAGES SIMILAIRES ET PROGRAMME D'ORDINATEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.04.2007 DE 102007019057**

(43) Veröffentlichungstag der Anmeldung:
**06.01.2010 Patentblatt 2010/01**

(60) Teilanmeldung:
**09013179.8 / 2 187 340**

(73) Patentinhaber: **Fraunhofer-Gesellschaft zur Förderung der angewandten Forschung e.V. 80686 München (DE)**

(72) Erfinder: **MEIERS, Thomas 12161 Berlin (DE)**

(74) Vertreter: **Burger, Markus et al Schoppe, Zimmermann, Stöckeler & Zinkler Patentanwälte Postfach 246 82043 Pullach bei München (DE)**

(56) Entgegenhaltungen:
**WO-A-02/33978     US-B1- 6 445 818**

**US-B1- 6 807 298**

- SHEN H C ET AL: "FEATURE FREQUENCY MATRICES AS TEXTURE IMAGE REPRESENTATION" PATTERN RECOGNITION LETTERS, ELSEVIER, AMSTERDAM, NL, Bd. 13, Nr. 3, 1. März 1992 (1992-03-01), Seiten 195-205, XP000270851 ISSN: 0167-8655
- ABDEL-MOTTALEB M ET AL: "Multimedia Descriptions Based on MPEG-7: Extraction and Applications" IEEE TRANSACTIONS ON MULTIMEDIA, IEEE SERVICE CENTER, PISCATAWAY, NJ, US, Bd. 6, Nr. 3, 1. Juni 2004 (2004-06-01), Seiten 459-468, XP011112743 ISSN: 1520-9210
- JIANRONG CAO ET AL: "A method for classification of scenery documentary using MPEG-7 edge histogram descriptor" VLSI DESIGN AND VIDEO TECHNOLOGY, 2005. PROCEEDINGS OF 2005 IEEE INTER NATIONAL WORKSHOP ON SUZHOU, CHINA MAY 28-30, 2005, PISCATAWAY, NJ, USA,IEEE, 28. Mai 2005 (2005-05-28), Seiten 105-108, XP010833327 ISBN: 978-0-7803-9005-8

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

- **MANJUNATH B S ET AL: "COLOR AND TEXTURE DESCRIPTORS" IEEE TRANSACTIONS ON CIRCUITS AND SYSTEMS FOR VIDEO TECHNOLOGY, IEEE SERVICE CENTER, PISCATAWAY, NJ, US, Bd. 11, Nr. 6, 1. Juni 2001 (2001-06-01), Seiten 703-715, XP001059862 ISSN: 1051-8215**
- **BO TAO ET AL: "Recognition and retrieval of textured images using gradient indexing" IMAGE PROCESSING, 1998. ICIP 98. PROCEEDINGS. 1998 INTERNATIONAL CONFE RENCE ON CHICAGO, IL, USA 4-7 OCT. 1998, LOS ALAMITOS, CA, USA,IEEE COMPUT. SOC, US, Bd. 1, 4. Oktober 1998 (1998-10-04), Seiten 57-61, XP010308865 ISBN: 978-0-8186-8821-8**
- **MOGHADDAM B ET AL: "Defining image content with multiple regions-of-interest" CONTENT-BASED ACCESS OF IMAGE AND VIDEO LIBRARIES, 1999. (CBAIVL '99). PROCEEDINGS. IEEE WORKSHOP ON FORT COLLINS, CO, USA 22 JUNE 1999, LOS ALAMITOS, CA, USA,IEEE COMPUT. SOC, US, 1. Januar 1999 (1999-01-01), Seiten 89-93, XP010343814 ISBN: 978-0-7695-0034-8**

**Beschreibung**

Die vorliegende Erfindung bezieht sich im Allgemeinen auf eine Vorrichtung und ein Verfahren zum Bestimmen eines Kanten-Histogramms eines Bildes, auf eine Vorrichtung und Verfahren zum Ablegen eines Bildes in einer Bilddatenbank, auf eine Vorrichtung und ein Verfahren zum Auffinden von zwei ähnlichen Bildern und auf ein Computerprogramm.

Gemäß einem Ausführungsbeispiel bezieht sich die vorliegende Erfindung im Übrigen auf ein Verfahren zur Generierung eines Textur-Kanten-Histogramms von digitalen Bildern. Gemäß einem weiteren Ausführungsbeispiel bezieht sich die vorliegende Erfindung auf eine inhaltsbasierte Beschreibung von Bildern, basierend auf Farb-, Textur- und Kanteninformationen, mit dem Ziel, eine Ähnlichkeitssuche beziehungsweise eine Klassifikation von Bildern zu semantischen Gruppen durchführen zu können.

Seit etlichen Jahren wächst die Größe von digitalen Bildarchiven sehr oder stark sogar ins Gigantische. Zeitschriftenverlage, Nachrichtenagenturen, Internet-Gemeinschaften (Internet-Communities), aber auch immer mehr private Nutzer archivieren eine Fülle von Bildern. Mit der Größe der Archive wächst auch die Schwierigkeit, archivierte Bilder zu finden. Das Problem der Suche wird verstärkt, wenn die Bilder nicht sinnvoll oder ausreichend durch Stichwörter beschrieben werden.

Es wurden daher Verfahren entwickelt, Bilder aufgrund ihrer visuellen Eigenschaften zu beschreiben und die Suchvorgänge anhand dieser visuellen Eigenschaften durchzuführen. Die visuellen Eigenschaften der Bilder werden beispielsweise durch Farbmerkmale, Texturmerkmale, Kantenmerkmale und/oder Formmerkmale, sogenannte Deskriptoren charakterisiert. Bei einem Archivieren der Bilder werden diese Deskriptoren beispielsweise automatisch extrahiert und in einer Datenbank gespeichert. Für jeden Deskriptor wird beispielsweise ein Abstandsmaß definiert, welches die Ähnlichkeit zweier Bilder in Bezug auf diesen Deskriptor angibt. Eine Herausforderung oder auch ein Problem bei der Definition eines Deskriptors liegt darin, eine (zum Beispiel von einem menschlichen Betrachter) "wahrgenommene" Ähnlichkeit zweier Bilder in Bezug auf ein visuelles Merkmal über das Abstandsmaß möglichst optimal abzubilden.

Eine inhaltsbasierte Ähnlichkeitssuche in Bezug auf einen Deskriptor erfolgt beispielsweise auf folgende Weise: ein Benutzer beziehungsweise ein Nutzer gibt ein Beispielbild vor. Eine Suchmaschine liest von diesem Beispielbild den entsprechenden Deskriptor aus einer Datenbank und berechnet die Abstandsmaße zu allen Bildern in der Datenbank über das Ähnlichkeitsmaß des Deskriptors. Bilder mit einem geringsten Abstand (Bilder mit einem ausreichend geringen Abstand, der zum Beispiel kleiner als ein vorgegebener Schwellwert ist) werden als Ergebnis der Suche ausgegeben.

Es wurden verschiedenste Verfahren entwickelt, Bilder aufgrund ihrer Farbmerkmale, Texturmerkmale und/oder Kantenmerkmale in Form von Deskriptoren zu beschreiben. Jedes dieser Verfahren trägt auf seine Art und Weise dazu bei, Bilder aufgrund ihrer Ähnlichkeit zu finden. Auch wurde ein neues Standardisierungsprojekt MPEG-7 initiiert, in dem eine visuelle Beschreibung von multimedialen Daten über Deskriptoren definiert wird. Jedoch zeigen auch diese Deskriptoren Schwächen.

So zeigt ein Kanten-Histogramm-Deskriptor (auch als Edge-Histogram-Deskriptor bezeichnet), der speziell zur Beschreibung von Kantenhäufigkeiten in Bildern entwickelt wurde, gute Ergebnisse für Bilder, in denen klar umrissene Objekte sich von einem Hintergrund abheben. Jedoch zeigt der genannte Kanten-Histogramm-Deskriptor, der beispielsweise in der US 6,807,298 B1 beschrieben ist, weniger gute Ergebnisse, wenn in Bildern flächenhafte Texturen sind, wie z. B. Wasserflächen oder Baumkronen. Solche Texturen werden auch als Kanten erkannt und mit klar sichtbaren Kanten vermischt.

Auch im dem Standardisierungsprojekt MPEG-7 gibt es Deskriptoren, die gezielt für Texturen eingesetzt werden können. So ist zum Beispiel in der WO 01/41071 A1 ein sogenannter "homogene-Textur-Deskriptor" (Homogeneous-Texture-Deskriptor) beschrieben. Die genannten Deskriptoren basieren im Allgemeinen auf einer Analyse von Frequenzen nach einer Fouriertransformation, die beispielsweise über das ganze Bild angewandt wird. Solche Deskriptoren sind sehr gut geeignet - dies war auch ihr Zweck - wenn regelmäßige Muster, wie z. B. Teppichmuster oder Tapetenmuster, beschrieben werden sollen. Die genannten Deskriptoren sind jedoch bei Photographien kaum geeignet.

Andere Verfahren verwenden Histogramme eines Gradientenwinkels jedes Pixels, wodurch sehr gut Bilder mit klar umrissenen Objekten erkannt werden können. Solche Beschreibungen versagen allerdings oftmals, wenn Bilder fein strukturierte Bereiche (wie z. B. Wasserflächen, feine Äste von Bäumen, Wolken, etc.) enthalten.

Somit ist festzuhalten, dass Verfahren existieren, die sich entweder auf eine Erkennung von klaren Kanten konzentrieren oder die gezielt bestimmte feine regelmäßige Texturen beschreiben.

Der Artikel "Feature frequency matrices as texture image representation" von H.C. Shen und C.Y.C. Bie (veröffentlicht in "Pattern Recognition Letters 13 (1992), März, Nr. 3, Amsterdam, Niederlande) beschreibt ein Darstellungsschema für Bilder mir homogener Textur. Jedes Bild ist als ein Satz von Merkmalsfrequenzmatrizen dargestellt, das die Auftrittsfrequenzen von verbundenen Merkmalsereignissen erfasst. Merkmalsereignisse werden durch Operatoren extrahiert, die durch Benutzer und/oder Anwendungen definiert sind. Die Wirksamkeit der Darstellung wird gezeigt durch Vergleichen derselben mit anderen Verfahren bei Klassifizierungsproblemen.

Der Artikel "Multimedia Descriptions Based on MPEG-7: Extraction and Applications" von M. Abdel-Mottaleb und S. Krishnamachari beschreibt, dass die Menge an digitalem Multimediainhalt, der für Verbraucher verfügbar ist, aufgrund der Existenz digitaler Aufnahmegeräte, wie z.B. Digitalkameras, Camcorder, und durch das Aufkommen digitaler Videorundsendung wächst. Mit dieser Zunahme des Inhalts wird es für Benutzer wichtig, Inhalt auf zeitlich angemessene Weise zu durchblättern und zu durchsuchen. Beschreibungen und Anmerkungen des Inhalts werden beschrieben, um Durchsuchen und Durchblättern von Inhalt zu ermöglichen. Es wird beschrieben, dass MPEG-7 ein neuer ISO-Standard für Multimediainhaltsbeschreibung ist. In dem Artikel werden drei Deskriptoren präsentiert, die für den Standard akzeptiert wurden. Außerdem werden Algorithmen zum automatischen Extrahieren dieser Deskriptoren beschrieben. Außerdem werden die Indexierungs- und Wiedergewinnungsalgorithmen beschrieben, die für diese Deskriptoren entwickelt wurden. Die Algorithmen werden als schnell und skalierbar für große Datenbanken beschrieben.

Der Artikel "A Method for Classification of Scenery Documentary using MPEG-7 Edge Histogram Descriptor" von J. Cao und A. Cai beschreibt ein Doppelschwellenwertverfahren zum Klassifizieren eines Landschaftsdokumentarfilms unter Verwendung eines MPEG-7-Randhistogrammdeskriptors. Die Segmente eines Landschaftsdokumentarfilms werden in zwei Kategorien klassifiziert, Gebäude- und Landschafts-Clips, durch globale EHD von Aufnahme-Schlüsselbildern mit dem Doppelschwellenwertverfahren. Somit kann die grundlegende Semantik jeder Aufnahme extrahiert werden, die das Gebäude oder die Landschaft beschreibt. Ferner wird die Genauigkeit der EHD-Berechnung erhöht durch Verbesserung und Glättung der Bilder, und die Ergebnisse der Klassifizierung werden unter den Zeitbeschränkungen von Aufnahme-Schlüsselbildern modifiziert.

In Anbetracht des oben beschriebenen Standes der Technik ist es die Aufgabe der vorliegenden Erfindung, ein Konzept zu schaffen, das eine besonders gute Identifizierung eines Bildes anhand eines Kanten-Histogramms ermöglicht.

Diese Aufgabe wird durch eine Vorrichtung zum Bestimmen eines Kanten-Histogramms eines Bildes gemäß Anspruch 1, durch eine Vorrichtung zum Ablegen eines Bildes in einer Bilddatenbank gemäß Anspruch 10, durch eine Vorrichtung zum Auffinden von zwei ähnlichen Bildern gemäß Anspruch 11, durch ein Verfahren zum Bestimmen eines Kanten-Histogramms eines Bildes gemäß Anspruch 12, durch ein Verfahren zum Ablegen eines Bildes in einer Bilddatenbank gemäß Anspruch 13, durch ein Verfahren zum Auffinden von zwei ähnlichen Bildern gemäß Anspruch 14 und durch ein Computerprogramm gemäß Anspruch 15 gelöst.

Gemäß einem Ausführungsbeispiel schafft die vorliegende Erfindung eine Vorrichtung zum Bestimmen eines Kanten-Histogramms eines Bildes basierend auf einer Information über eine Gradientenstärke und eine Gradientenrichtung eines lokalen Gradienten in einem Bildinhalt eines Teilbildes des Bildes. Die Vorrichtung umfasst einen Zuordner, der ausgelegt ist, um die Informationen über die Gradientenstärke und die Gradientenrichtung, basierend auf einer Zuordnungsvorschrift zu einem Kantentyp zuzuordnen, um eine Kantentypinformation zu erhalten. Die Zuordnungsvorschrift ist so gewählt, dass bei einer vorgegebenen Gradientenrichtung zumindest drei verschiedene zugeordnete Kantentypen existieren, die verschiedene Gradientenstärken wiederspiegeln. Die Vorrichtung umfasst ferner einen Kanten-Histogramm-Bestimmer, der ausgelegt ist, um das Kanten-Histogramm basierend auf der Kantentyp-Information zu bestimmen, so dass in dem Kantentyp-Histogramm zumindest drei Kantentypen mit verschiedenen zugeordneten Gradientenstärken unterscheidbar sind.

Das genannte Ausführungsbeispiel der vorliegenden Erfindung basiert auf der Erkenntnis, dass eine Gradientenstärke ein wesentliches Merkmal bei einer Beschreibung einer Kante ist, und dass ein Histogramm, das verschiedene Kantentypen in dem Bild beschreibt, besonders aussagekräftig ist, wenn in diesem Histogramm zumindest Kantentypen mit drei verschiedenen Kantenstärken unterscheidbar sind. So wurde erkannt, dass ein Bild besonders gut durch ein Histogramm charakterisiert wird, wenn im Wesentlichen einfarbige Bereiche, in denen keine Kanten vorkommen beziehungsweise denen eine sehr geringe Kantenstärke zugeordnet ist, Bereiche mit einer Textur, in denen nur schwache bis mittelstarke Kanten vorkommen, und stark sichtbare Objektberandungen, die durch Kanten mit hoher Kantenstärke dargestellt werden, unterschieden werden.

In anderen Worten, die drei verschiedenen Kantenstärken, die bei der Erzeugung des Kantentyp-Histogramms unterschieden werden, spiegeln unterschiedliche Flächentypen, nämlich im Wesentlichen einfarbige Flächen, Texturen und Objektberandungen wider. Somit ermöglicht die oben beschriebene Bestimmung einer Kantentyp-Information, die genannten Flächentypen klar zu trennen. Dadurch ist das Kanten-Histogramm besonders aussagekräftig und ermöglicht eine Unterscheidung zwischen Bildern mit vielen Texturen und Bildern mit vielen Objektberandungen. Dementsprechend ermöglicht das beschriebene Konzept zur Erzeugung eines Kanten-Histogramms eine besonders zuverlässige Datenbanksuche beziehungsweise einen besonders zuverlässigen Bildvergleich basierend auf dem Kanten-Histogramm. Somit ist das beschriebene Konzept zum Bestimmen eines Kanten-Histogramms in gleicher Weise auf eine Vielzahl von unterschiedlichen Bildern, im Wesentlichen unabhängig von dem Bildmotiv, mit guten Ergebnissen anwendbar.

Gemäß einem weiteren Aspekt schafft die vorliegende Erfindung eine Vorrichtung zum Bestimmen eines Kanten-Histogramms eines Bildes basierend auf einer Information über lokale Kantentypen für eine Mehrzahl von benachbarten Bildteilen des Bildes. Die Vorrichtung umfasst einen gewichtenden Kanten-Histogramm-Bestimmer, der ausgelegt ist, um eine gewichtete Kantentyp-Häufigkeitsinformation, die eine Auftretens-Häufigkeit von verschiedenen lokalen Kantentypen beschreibt, für einen Bildausschnitt, der eine Mehrzahl von Bildteilen umfasst, zu bestimmen, um das Kanten-Histogramm zu erhalten. Der gewichtende Kanten-Histogramm-Bestimmer ist ausgelegt, um bei dem Bestimmen der gewichteten Kanten-Typ-Häufigkeitsinformation das Auftreten lokaler Kantentypen in Bildteilen, die zu einer sich über mehrere Bildteile erstreckenden ausgedehnten Kante gehören, höher zu gewichten als das Auftreten von lokalen Kantentypen, die zu isolierten lokalen Kanten gehören.

Der beschriebene Aspekt der vorliegenden Erfindung basiert auf der Erkenntnis, dass Kantentypen, die zu deutlich sichtbaren, (räumlich) ausgedehnten Kanten gehören, einen besonders Informationswert tragen. Es wurde erkannt, dass man diesem Umstand, der darin begründet ist, dass ausgedehnte Kanten von einem Benutzer besonders deutlich wahrgenommen werden, durch eine besonders starke Gewichtung des Auftretens der entsprechenden Kantentypen gerecht werden kann. So sei darauf hingewiesen, dass isolierte lokale Kanten (also kurze Kantenabschnitte, die nicht Teil einer ausgedehnten langen Kante sind), typischerweise in Texturen auftreten. Somit nehmen typischerweise die isolierten lokalen Kanten (also Kanten mit einer Länge, die geringer als eine vorgegebene Schwellenlänge ist) einen flächenmäßig sehr großen Teil des Bildes ein. Ausgeprägte, sich über mehrere Bildteile erstreckende ausgedehnte Kanten (also beispielsweise Kanten, deren Länge größer als der Kantenlängen-Schwellwert ist), nehmen hingegen flächenmäßig nur einen geringen Teil des Bildes ein. Dies ist einfach verständlich, da die ausgedehnten Kanten in der Regel Berandungen von Objekten bilden, während hingegen die isolierten lokalen Kanten in der Regel im Rahmen der Texturen der Objekte auftreten und somit Oberflächen der Objekte ausfüllen. Es ist einfach ersichtlich, dass in vielen Bildern eine durch die Oberflächen eingenommene Fläche wesentlich größer ist als die durch Objektberandungen eingenommene Fläche. Somit würde in einem ungewichteten Histogramm das Auftreten von Kantentypen von isolierten lokalen Kanten dominieren. Durch eine entsprechende Höhergewichtung des Auftretens von Kantentypen bei ausgedehnten Kanten wird diesem Ungleichgewicht entgegengewirkt. Somit entsteht ein ausgewogenes Kanten-Histogramm, das auch bei Vorhandensein von vielen isolierten lokalen Kanten die Kantentypen von zu ausgedehnten Kanten gehörigen Bildteilen in angemessener Weise widerspiegelt. Damit ist das entsprechende Kanten-Histogramm besonders gut an eine menschliche Wahrnehmung angepasst, und ermöglicht wiederum einen besonders gut an die menschliche Wahrnehmung angepassten Vergleich von Bildern.

Gemäß einem weiteren Aspekt schafft die vorliegende Erfindung eine weitere Einrichtung zum Bestimmen eines Kanten-Histogramms eines Bildes basierend auf einer Information über lokale Kantentypen für eine Mehrzahl von benachbarten Bildteilen des Bildes. Die entsprechende Vorrichtung umfasst einen Kanten-Histogramm-Bestimmer, der ausgelegt ist, um ein Histogramm zu bestimmen, das eine Kantentyp-Häufigkeitsinformation für mehrere Bildteile, die zu einem ersten Block von Bildteilen gehören, zusammenfasst. Der Kanten-Histogramm-Bestimmer ist ferner ausgelegt, um einen Kantentyp, dem in dem Histogramm ein maximaler Häufigkeitswert zugeordnet ist, als Block-Kantentyp für den ersten Block zu bestimmen. Ferner ist der Kanten-Histogramm-Bestimmer ausgelegt, um entsprechende jeweilige Histogramme und entsprechende jeweilige Block-Kantentypen für eine Mehrzahl von weiteren Blöcken zu bestimmen. Der Kanten-Histogramm-Bestimmer ist außerdem ausgelegt, um ein Histogramm, das eine Häufigkeit von verschiedenen Kantentypen unter den Block-Kantentypen für die verschiedenen Blöcke beschreibt, zu bestimmen, um das Kanten-Histogramm für das Bild zu erhalten.

Dem genannten Aspekt liegt die Erkenntnis zugrunde, dass eine blockweise Verarbeitung des Bildes zu besonders gut an den menschlichen Seheindruck angepassten und ferner störungsarmen Ergebnissen führt, wenn für jeden Block ein dominanter Block-Kantentyp für die Bestimmung eines weiteren, übergeordneten Histogramms identifiziert wird. So wurde erkannt, dass auch ein menschlicher Betrachter verschiedenen Bereichen eines Bildes beziehungsweise Dokuments, die den Blöcken von Bildteilen entsprechen, einen dominanten Kantentyp zugeordnet. Bei der Bildung des übergeordneten Histogramms, das die Häufigkeit von verschiedenen Kantentypen unter den Block-Kantentypen beschreibt, werden somit nicht-dominante Kantentypen eines jeden Blocks außer Betracht gelassen. Die Berücksichtigung der nicht-dominanten Kantentypen bei der Bestimmung des übergeordneten Histogramms würde allerdings im Regelfall nicht zu einer Verbesserung des übergeordneten Histogramms beitragen, sondern viel mehr das Hinzufügen einer rauschartigen Störung zu dem übergeordneten Histogramm bedeuten. Aus diesem Grunde ermöglicht gerade das Weglassen der nicht-dominanten Kantentypen durch die Bestimmung des Block-Kantentypen, Störungen innerhalb des übergeordneten Histogramms gering zu halten. Somit trägt das beschriebene Konzept dazu bei, ein besonders zuverlässiges Kanten-Histogramm zu erhalten, das sich besonders gut für eine Wiedererkennung eignet. Da Texturen und Objektberadungen, wie schon oben erläutert, typischerweise andere Kantentypen aufweisen, ermöglicht das beschriebene Konzept im übrigen auch eine klare Trennung der genannten unterschiedlichen Kantentypen durch Bestimmung eines Block-Kantentyps. Somit wird beispielsweise einem Block ein bestimmter Kantentyp zugeordnet, der einen Rückschluss darauf ermöglicht, ob in dem entsprechenden Block Texturen oder Objektberandungen dominant sind. Auch dieser Effekt trägt zu einer weiteren Verbesserung der Qualität des so gebildeten Kanten-Histogramms bei.

Gemäß einem weiteren Ausführungsbeispiel schafft die vorliegende Erfindung ferner entsprechende Verfahren zum Bestimmen eines Kanten-Histogramms eines Bildes. Außerdem schafft die vorliegende Erfindung Vorrichtungen und Verfahren zum Ablegen eines Bildes sowie zum Auffinden von zwei ähnlichen Bildern. Die genannten Vorrichtungen und Verfahren nutzen dabei die obigen Erkenntnisse aus und basieren im Wesentlichen auf den oben beschriebenen Konzepten zum Bestimmen eines Kanten-Histogramms.

Weitere Ausführungsbeispiele der vorliegenden Erfindung sind im Übrigen durch die abhängigen Patentansprüche definiert.

Bevorzugte Ausführungsbeispiele der vorliegenden Erfindung werden nachfolgend Bezug nehmend auf die beiliegenden Figuren erläutert. Es zeigen:

Fig. 1A bis 1D     ein Flussdiagramm eines Verfahrens zum Bestimmen eines Kanten-Histogramms gemäß einem Ausführungs- beispiel der vorliegenden Erfindung;

Fig. 2A     eine graphische Darstellung einer Ausrichtung ei- nes Gradientenwinkels;

Fig. 2B     eine graphische Darstellung einer Vorgehensweise bei einer Aufstellung von Textur-Kantentypen durch Aufteilung eines Gradientenstärke- Gradientenwinkel-Wertebereichs in Teilbereiche;

Fig. 3     eine graphische Darstellung einer Zuordnung von Pixeln zu einem Textur-Kantentyp;

Fig. 4     eine graphische Darstellung eines Gitternetzes mit Blöcken;

Fig. 5A     eine schematische Darstellung, die eine Bestim- mung eines Textur-Kantentyps für einen Block zeigt;

Fig. 5B     eine graphische Darstellung eines Konzepts zur Gewichtung eines Textur-Kantentyps innerhalb ei- nes Blocks;

Fig. 6     eine graphische Darstellung eines Verfahrens zur Bildung von Textur-Kanten-Teilhistogrammen für Rechtecke;

Fig. 7     eine graphische Darstellung eines Verfahrens zur Bildung eines Textur-Kanten-Histogramms;

Fig. 8     eine graphische Darstellung eines Bildes, eines Rechtecks, eines Blocks und eines Pixels;

Fig. 9A     ein Flussdiagramm eines Verfahrens zum Ablegen eines Bildes in einer Bilddatenbank, gemäß einem Ausführungsbeispiel der vorliegenden Erfindung; und

Fig. 9B     ein Flussdiagramm eines Verfahrens zum Auffinden von zwei ähnlichen Bildern, gemäß einem Ausführungsbeispiel der vorliegenden Erfindung.

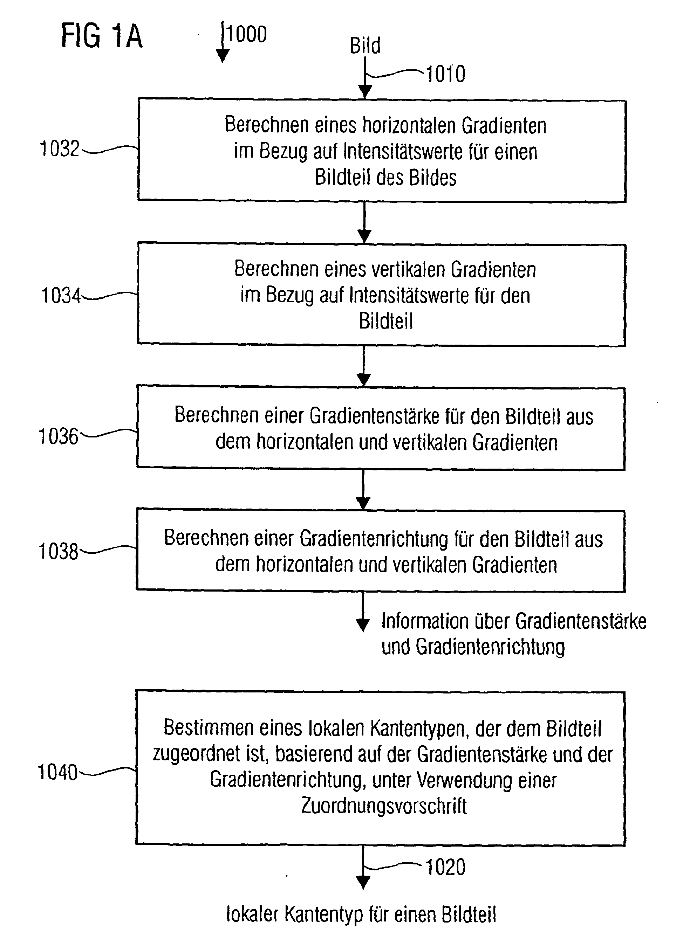

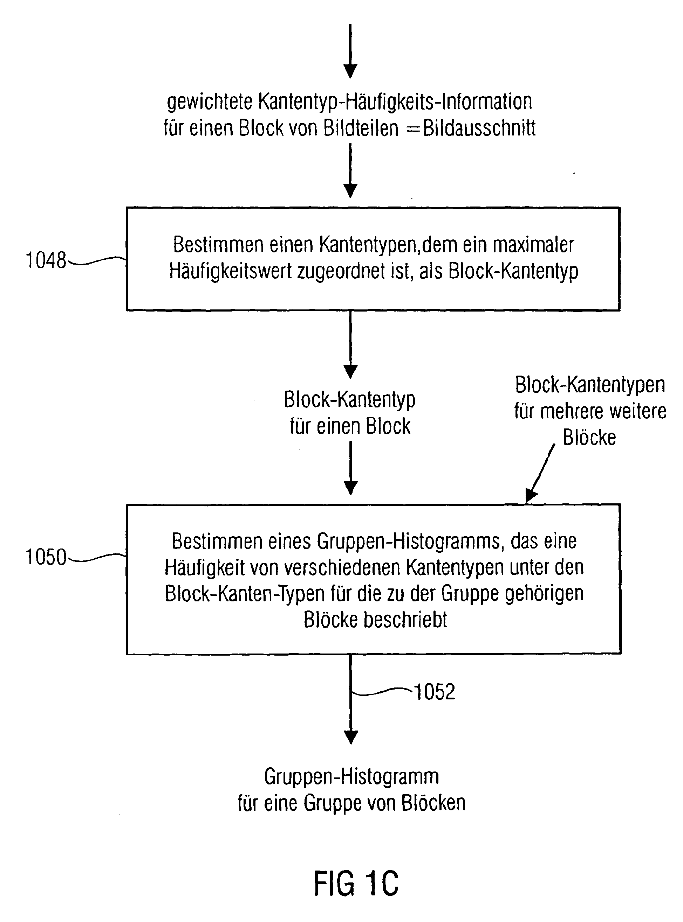

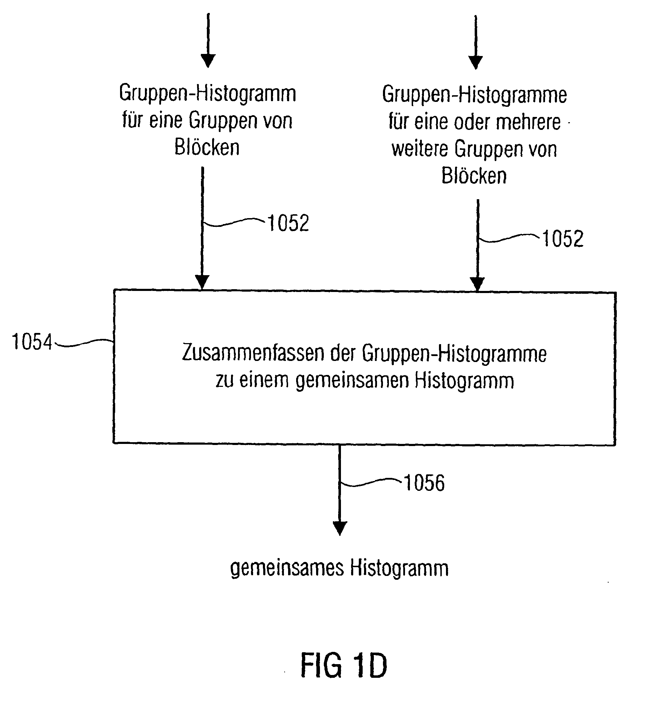

Fig. 1A - 1D zeigen ein Flussdiagramm eines Verfahrens zum Bestimmen eines Kanten-Histogramms, gemäß einem Ausführungsbeispiel der vorliegenden Erfindung. Das Verfahren der Fig. 1A - 1D ist in seiner Gesamtheit mit 1000 bezeichnet. Es wird im Rahmen der vorliegenden Beschreibung angenommen, dass das Verfahren 1000 als Eingangsgröße ein Bild 1010 empfängt, das beispielsweise in digitaler Form vorliegt. Beispielsweise kann das Bild 1010 als eine Matrix von Pixeln gegeben sein, wobei die Pixel in Form von Zeilen und Spalten angeordnet sind. Das Bild 1010 kann allerdings alternativ auch in analoger Form, beispielsweise in Form von kontinuierlichen elektrischen Signalen, gegeben sein.

Ferner wird im Übrigen im Folgenden davon ausgegangen, dass in dem Bild zwei Richtungen definiert sind, die im Folgenden als horizontale Richtung und vertikale Richtung bezeichnet sind. Beispielsweise kann die horizontale Richtung entlang der Zeilen des Bildes (also von einer ersten Spalte hin zu einer letzten Spalte) verlaufen. Die vertikale Richtung kann beispielsweise entlang der Spalten, also beispielsweise von einer ersten Zeile zu einer letzten Zeile verlaufen.

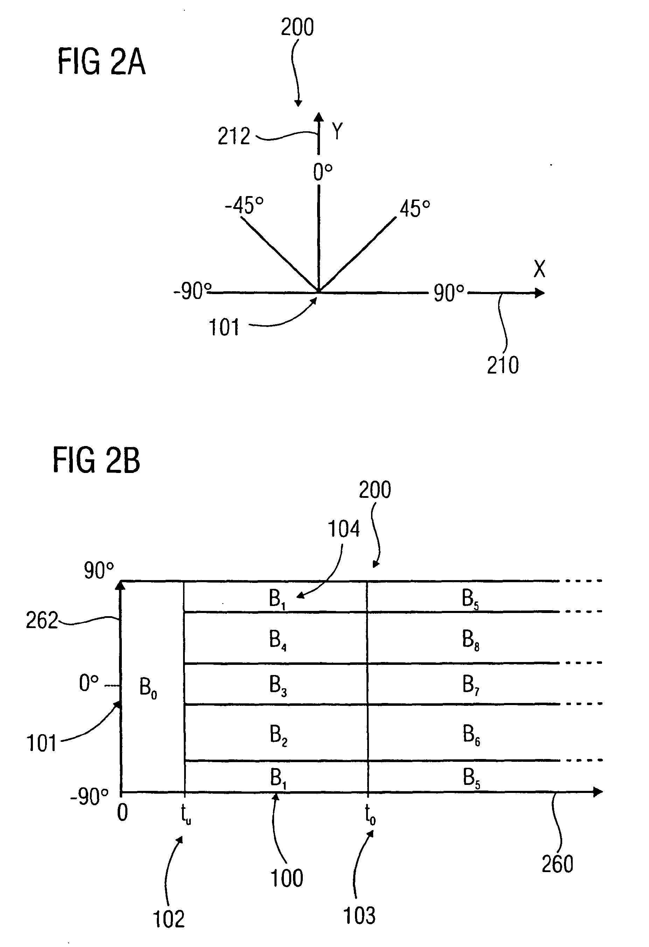

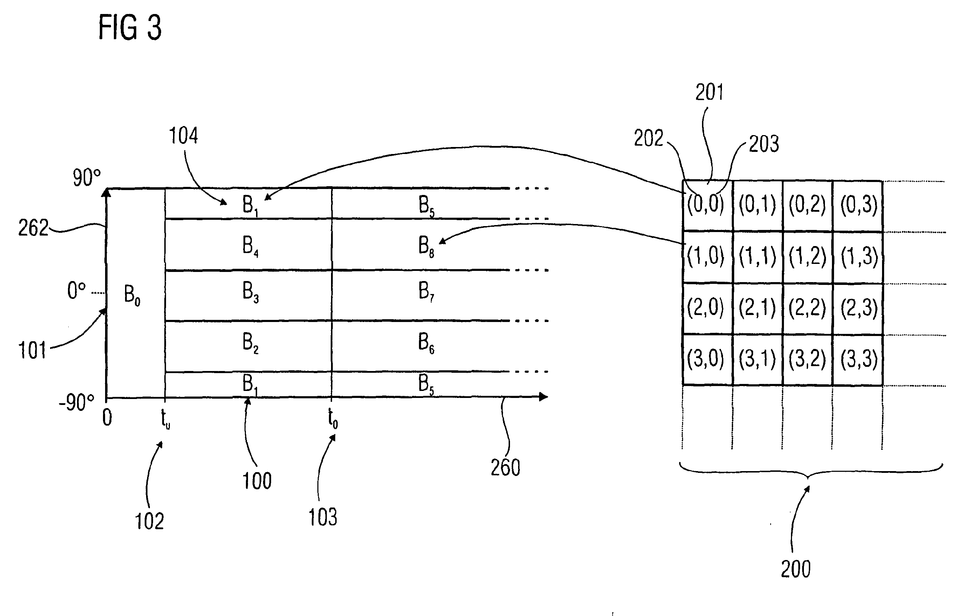

Eine Darstellung des Bildes in Form von Zeilen und Spalten ist beispielsweise in der graphischen Darstellung der Fig. 3 gezeigt. So zeigt die Fig. 3 ein Bild beziehungsweise digitales Bild 200. Ein Pixel ist beispielhaft mit 201 bezeichnet. Im Übrigen sei darauf hingewiesen, dass in der graphischen Darstellung der Fig. 2 die Pixel mit zwei Indizes bezeichnet sind. Ein erster Index 202 (erster Wert in der Klammer) beschreibt beispielsweise, beginnend bei Null, eine Zeilenummer einer Zeile, in der das Pixel angeordnet ist. Ein zweiter Index 203 (zweiter Wert in der Klammer) beschreibt beispielsweise, beginnend bei Null, eine Zeilennummer einer Zeile, in der das Pixel angeordnet ist.

Ziel des im Folgenden beispielhaft beschriebenen Verfahrens ist die Gewinnung eines Histogramms, welches nicht nur ein lokales Auftreten und eine lokale Häufigkeit von Kanten in einem Bild (zum Beispiel in dem Bild 1010) beschreibt, sondern auch eine lokale Häufigkeit beziehungsweise eine Größe von Flächen mit bestimmten Texturen beschreibt. "Lokal" bedeutet hierbei, dass das Bild (zum Beispiel das Bild 1010) in Rechtecke zerlegt wird, und dass für jedes Rechteck die Auftretungshäufigkeiten bestimmter Texturen und Kanten bestimmt werden und in einem Gesamt-Histogramm dargestellt werden.

Bei der Bestimmung dieses Textur-Kanten-Histogramms beziehungsweise Gesamt-Histogramms wird in mehreren Stufen vorgegangen, wie im Folgenden ausgeführt wird. Das Verfahren 1010 umfasst beispielsweise zunächst ein Bestimmen eines lokalen Kantentypen 1020 zu einem Bildteil des Bildes 1010. Unter einem Bildteil wird im Folgenden beispielsweise ein Pixel verstanden. Bei dem Bildteil kann es sich aber auch um einen größeren Bildausschnitt handeln, der eine Mehrzahl von Pixeln umfasst. Das Verfahren 1000 umfasst einen ersten Schritt 1032, in dem ein horizontaler Gradient in Bezug auf Intensitätswerte für einen Bildteil (also zum Beispiel für einen Pixel) des Bildes bestimmt wird. In einem zweiten Schritt 1034 wird ferner beispielsweise ein vertikaler Gradient in Bezug auf Intensitätswerte für den Bildteil bestimmt. In anderen Worten, es werden Gradienten in zwei voneinander verschiedenen Richtungen in Bezug auf Intensitätswerte für einen Bildteil des Bildes bestimmt. Somit ist einem Bildteil des Bildes ein erster Gradientenwert (zum Beispiel ein Wert eines horizontalen Gradienten an dem Ort des Bildteils) und ein zweiter Gradientenwert (z. B. ein Wert eines vertikalen Gradienten an dem Ort des Bildteils) zugeordnet. In anderen Worten, in dem ersten Schritt 1032 und in dem zweiten Schritt 1034 werden beispielsweise zunächst von dem Bild 1010 mit einem horizontalen Filteroperator und einem vertikalen Filteroperator, die aus Intensitätswerte der Bildpixel angewandt werden, sowohl Gradienten in vertikaler Richtung als auch Gradienten in horizontaler Richtung berechnet.

Bei den Filteroperatoren kann beispielsweise ein Sobel-Operator oder ein optimierter Sobel-Operator verwendet werden, der auf die Intensitätswerte der Pixel des digitalen Bildes angewendet werden kann. In anderen Worten, durch Anwendung eines ersten Filteroperators auf das Bild 1010 kann beispielsweise der horizontale Gradient bestimmt werden, und durch Anwendung eines zweiten Filteroperators (der beispielsweise von dem ersten Filteroperator verschieden ist, oder der beispielsweise gegenüber dem ersten Filteroperator gedreht sein kann), kann ferner der vertikale Gradient berechnet werden. Als Intensitätswerte $I_{(j,i)}$ kommen zum Beispiel die Helligkeitswerte der Pixel, aber auch einzelne Farbkanäle oder einzelne Dimensionen von Farbräumen in Frage. Im Folgenden wird ein Beispiel für eine Berechnung von geeigneten Intensitätswerten $I_{(j,i)}$ beschrieben. So kann $I_{(j,i)}$ nach der Gleichung

$$I(j,i) = w_1 \cdot r(j,i) + w_2 \cdot g(j,i) + w_3 \cdot b(j,i) ,$$

berechnet werden, wobei $w_i$ Gewichtsfaktoren mit

$$\sum_1^3 w_i = 1$$

sind, wobei $0 < i < image.Width$ die Pixelspalte im Bild angibt und $0 < j < image.Height$ die Pixelreihe im Bild angibt, wobei $r(j,i)$ den Rot-Wert des Pixels in Spalte $i$ und Reihe $j$ im RGB-Format und $g(j,i)$ den Grün-Wert des Pixels in Spalte $i$ und Reihe $j$ im RGB-Format und $b(j,i)$ den Blau-Wert des Pixels in Spalte i und Reihe $j$ im RGB-Format angibt.

Mit $w_i = ⅓$ für $i=1,..,3$ wird mit $I(j,i)$ der Helligkeitswert ausgedrückt.

$I_{(j,i)}$ kann aber auch als gewichtete Summe von Komponenten aus anderen Farbräumen, wie zum Beispiel dem HSV-Farbraum dargestellt werden, zum Beispiel gemäß

$$I(i,j) = w_1 \cdot h(j,i) + w_2 \cdot s(j,i) + w_3 \cdot v(j,i) ,$$

wobei w(i) Gewichtsfaktoren sind, $0 < i < Image.width$ die Pixelspalte in dem Bild angibt, $0 < j < image.Height$ die Pixelreihe in dem Bild angibt, h(j,i) den Farbton des Pixels in Spalte i und Reihe j in dem HSV-Farbraum angibt, s(j,i) den Farbsättigungswert des Pixels in Spalte i und Reihe j in dem HSV-Farbraum angibt und v(j,i) den Helligkeitswert des Pixels in Spalte i und Reihe j in dem HSV-Farbraum angibt.

Als Filterperator kann beispielsweise ein Sobel-Operator $S_x$ beziehungsweise $S_y$ verwendet werden, beispielsweise gemäß

$$S_x = \begin{bmatrix} -1 & 0 & 1 \\ -2 & 0 & 2 \\ -1 & 0 & 1 \end{bmatrix} \text{ sowie } S_y = \begin{bmatrix} -1 & -2 & -1 \\ 0 & 0 & 0 \\ 1 & 2 & 1 \end{bmatrix}$$

Alternativ kann ein optimierter Sobel-Operator $s_x^{opt}$ beziehungsweise $S_y^{opt}$ verwendet werden, beispielsweise gemäß

$$S_x^{opt} = \begin{bmatrix} -3 & 0 & 3 \\ -10 & 0 & 10 \\ -3 & 0 & 3 \end{bmatrix} \text{ sowie } S_y^{opt} = \begin{bmatrix} -3 & -10 & -3 \\ 0 & 0 & 0 \\ 3 & 10 & 3 \end{bmatrix}.$$

Eine Anwendung des horizontalen und vertikalen Sobel-Operators beziehungsweise des optimierten Sobel-Operators auf das gesamte Bild führt zu dem horizontalen Gradienten gemäß

$$G_x = I * S_x \text{ oder } G_x = I * S_x^{opt} \quad,$$

abhängig davon, ob der horizontale Sobel-Operator $S_x$ oder der optimierte Sobel-Operator $S_x^{opt}$ verwendet wird, und zu dem vertikalen Gradienten $G_y$ gemäß

$$G_y(j,i) = I(j,i) * S_y \text{ oder } G_y(j,i) = I(j,i) * S_y^{opt} \quad,$$

je nachdem ,ob der vertikale Sobel-Operator Sy oder der optimierte vertikale Sobel-Operator $S_y^{opt}$ verwendet wird.

Diesbezüglich sei darauf hingewiesen, das die Anwendung der Sobel-Operatoren auf die erste Spalte und auf die letzte Spalte beziehungsweise auf die erste Reihe und auf die letzte Reihe nicht direkt möglich ist. Statt dessen werden hier (also in der ersten Zeile und in der letzten Zeile, sowie in der ersten Spalte und in der letzten Spalte) die entsprechenden Werte für den Gradienten beispielsweise auf Null gesetzt.

Zusammenfassend kann somit festgehalten werden dass der horizontale Gradient als eine örtlich (im Hinblick auf die Zeilen und Spalten) variable Funktion erhalten werden kann, indem das Bild 1010 mit einem horizontalen Sobel-Operator beziehungsweise einem optimierten horizontalen Sobel-Operator gefaltet wird. Diesbezüglich sei im Übrigen darauf hingewiesen, dass für jede Pixelposition (mit Ausnahme von Pixel entlang der Bildränder) ein lokaler Gradientenwert berechnet werden kann. Für die Berechnung eines lokalen Gradientenwertes an einer Pixelposition werden beispielsweise Pixel mit einbezogen, die in einer Umgebung der betreffenden Pixelposition angeordnet sind beziehungsweise die die betreffende Pixelposition umgeben.

Somit wird unter einem lokal Gradientenwert für ein Bildteil beziehungsweise für eine Pixelposition ein Gradientenwert verstanden, der unter Verwendung von den betreffenden Bildteil umgebenden Bildteilen beziehungsweise unter Verwendung von die Pixelposition umgebenden Pixelpositionen bestimmt wurde.

Im Übrigen kann zusammenfassend ebenso festgehalten werden, dass der vertikale Gradient beispielsweise durch eine Faltung des Bildes 1010 mit einem vertikalen Sobel-Operator beziehungsweise einem optimierten vertikalen Sobel-Operator erhalten werden kann.

Somit steht bei einem Ausführungsbeispiel der vorliegenden Erfindung beispielsweise für jede Pixelposition (oder zugeordnet zu jedem Bildteil) ein Wert eines horizontalen Gradienten $G_x(j,i)$ sowie ein Wert eines vertikalen Gradienten $G_y(j,i)$ zur Verfügung.

Allerdings ist es ausreichend, wenn die entsprechenden Werte des horizontalen Gradienten und des vertikalen Gradienten zu Pixelpositionen beziehungsweise für Bildteile zur Verfügung stehen, die im Folgendem weiter verarbeitet werden. Die Tatsache, dass im Übrigen Gradientenwerte von Pixelpositionen beziehungsweise von Bildteilen entlang des Bildrandes nicht präzise berechnet werden können (sondern nur näherungsweise berechnet werden beziehungsweise zu Null gesetzt werden) stört dabei nicht wesentlich.

Im Übrigen sei darauf hingewiesen, dass es für das beschriebenen Ausführungsbeispiel nicht wesentlich ist, wie genau der Wert für den horizontalen Gradienten und der Wert für den vertikalen Gradienten berechnet werden. So können andere als die gezeigten Sobel-Operatoren eingesetzt werden, oder es kann auch ein vollkommen unterschiedliches Konzept zur Berechnung von Gradienten (beispielsweise im Hinblick auf die Intensitätswerte I(j,i)) verwendet werden.

Im Übrigen sei darauf hingewiesen, dass im Rahmen der vorliegenden Beschreibung i und j jeweils beispielsweise Pixelpositionen beschreiben, wobei i beispielsweise eine Pixelspalte bezeichnet und wobei j beispielsweise eine Pixelreihe in dem Bild bezeichnet. Alternativ können i und j allerdings auch ganz allgemein eine Position von Bildteilen in dem Bild bezeichnen.

Bezugnehmend auf die in Fig. 1A umfasst das Verfahren 1000 in einem dritten Schritt 1036 ein Berechnen einer Gradientenstärke 100 für den Bildteil (oder für das betreffende Pixel) aus dem horizontalen Gradienten und dem vertikalen Gradienten. Ferner umfasst das Verfahren 1000 in einem vierten Schritt 1038 ein Berechnen einer Gradientenrichtung bzw. eines Gradientenwinkels 101 für den Bildteil oder für das betreffende Pixel aus dem horizontalen Gradienten und dem vertikalen Gradienten. In anderen Worten, in den Schritten 1036, 1038 wird ganz allgemein eine Berechnung einer Gradientenstärke 100 und eines Gradientenwinkels 101, der eine Gradientenrichtung beschreibt, für jedes Pixel in dem Bild 1010, (oder zumindest für eine Mehrzahl von Pixeln) aus dem horizontalen Gradienten $G_x$ und dem vertikalen Gradienten $G_y$ vorgenommen. Zur Veranschaulichung der Gradientenrichtung beziehungsweise des Gradientenwinkels wird auf die Fig. 2A verwiesen. Die Fig. 2A zeigt eine graphische Darstellung einer Ausrichtung des Gradientenwinkels. Die graphische Darstellung gemäß der Fig. 2a ist in ihrer Gesamtheit mit 200 bezeichnet. Fig. 2a zeigt ein Koordinatensystem, das durch eine x-Achse 210, sowie durch eine y-Achse 212 definiert ist. Die x-Achse 210 entspricht beispielsweise einer horizontalen Richtung, während hingegen die y-Achse 212 einer vertikalen Richtung entspricht. In das Koordinatensystem sind ferner verschiedene Winkel eingezeichnet. Diesbezüglich sei darauf hingewiesen, dass ein Gradientenwinkel von 0° beispielsweise einer vertikalen Kante entspricht. Ein Gradientenwinkel von 45° entspricht beispielsweise einer diagonal aufsteigenden Kante. Ein Gradientenwinkel von -45° entspricht beispielsweise einer diagonal absteigenden Kante. Ein Gradientenwinkel von 90° beziehungsweise von -90° entspricht im Übrigen beispielsweise einer horizontalen Kante. Diesbezüglich sei darauf hingewiesen, dass typischerweise die Gradientenrichtung senkrecht zu dem Verlauf der Kante ist, da ja die Gradientenrichtung beziehungsweise der Gradientenwinkel die Richtung einer steilsten Intensitätsveränderung beschreibt. Eine Kante hingegen ist im Wesentlichen senkrecht zu der Richtung der Änderung der Intensität.

Im Folgenden wird beschrieben, wie sowohl die Gradientenstärke als auch der Gradientenwinkel auf der Basis der Gradientenwerte des horizontalen Gradienten und des vertikalen Gradienten berechnet werden können. So kann beispielsweise die Gradientenstärke berechnet werden, indem basierend auf dem horizontalen Gradientenwert und dem vertikalen Gradientenwert die Norm berechnet wird. In anderen Worten, der horizontale Gradientenwert und der vertikale Gradientenwert werden beispielsweise als Komponenten eines Vektors betrachtet, wobei die Gradientenstärke dann der Betrag beziehungsweise die Länge des entsprechenden Gradientenvektors ist. Die Gradientenstärke G(j,i) für ein Pixel(j,i) beziehungsweise für einen Bildteil mit den Indizes (j, i) kann beispielsweise gemäß der folgenden Formel berechnet werden:

$$G(j,i) = \sqrt{G_x^2(j,i) + G_y^2(j,i)} \quad \text{für Pixel } (j,i)$$

Alternativ kann die Gradientenstärke G(j,i) für das Pixel mit den Indizes (j,i) beziehungsweise für einen Bildteil mit den Indizes (j,i) gemäß der folgenden Gleichung berechnet werden:

$$G(j,i) = |G_x(j,i)| + |G_y(j,i)| \quad \text{für Pixel } (j,i).$$

Im Folgenden wird noch ein Beispiel für die Berechnung der Gradientenrichtung beziehungsweise des Gradientenwinkels, wie es in dem vierten Schritt 1038 vorgenommen wird, beschrieben. Sind der horizontale Gradientenwert $G_x(j,i)$ und der vertikale Gradientenwert $G_y(j,i)$ für ein Pixel (j,i) beziehungsweise für einen Bildteil (j,i) bekannt, so kann der Gradientenwinkel für jedes Pixel (beziehungsweise für eine Mehrzahl von Pixeln) beispielsweise gemäß der folgenden Berechnungsvorschrift ermittelt werden:

$$\alpha(j,i) = 0^{\bullet} \qquad \text{falls} \quad G_x(j,i) = 0, G_y(j,i) = 0$$

$$\alpha(j,i) = 90^{\bullet} \qquad \text{falls} \quad G_x(j,i) = 0, G_y(j,i) \neq 0$$

$$\alpha(j,i) = \arctan\left(\frac{G_y(j,i)}{G_x(j,i)}\right) \quad \text{falls} \quad G_x(j,i) \neq 0$$

Der Gradientenwinkel beziehungsweise die Gradientenrichtung, die zu der Pixelposition (j,i) beziehungsweise zu dem Bildteil mit den Indizes (j,i) gehört, ist hier mit $\alpha(j,i)$ bezeichnet. Arctan bezeichnet eine Arcus-Tangens-Funktion.

Gemäß der oben gegebenen Berechnungsvorschrift liegt somit der Gradientenwinkel $\alpha(j,i)$ in einem Bereich zwischen -90° (nicht eingeschlossen) und 90° (eingeschlossen) (vergleiche Fig. 2b).

Auf die oben beschriebenen Weise wird jedem Pixel (oder Bildteil) an der Stelle (j,i) des Bildes 1010 genau ein Wert für die Gradientenstärke G(j,i) und genau ein Wert für den Gradientenwinkel $\alpha(j,i)$ zugeordnet. Die Ausrichtung verschiedener Gradientenwinkel ist, wie schon vorher beschrieben, in Fig. 2a gezeigt.

Zusammenfassend ist festzuhalten, dass in den ersten vier Schritten 1032 - 1038 des Verfahrens 1000 eine Information über eine Gradientenstärke (zum Beispiel bezeichnet durch die Gradientenstärke G(j,i)) sowie über eine Gradientenrichtung (beschrieben beispielsweise durch den Gradientenwinkel $\alpha(j,i)$) bestimmt wurde. Diesbezüglich sei darauf hingewiesen, dass auch andere Verfahren zur Berechnung von Gradientenstärke und Gradientenrichtung, die hier nicht beschrieben wurden, eingesetzt werden können. Beispielsweise kann das Bild 1010 mit zumindest drei in verschiedenen Richtung orientierten Filteroperatoren verarbeitet werden. So können beispielsweise für eine bestimmte Pixelposition beziehungsweise für eine bestimmte Position eines Bildteils (gekennzeichnet beispielsweise durch Indizes (j,i)) drei oder mehr Filterwerte vorliegen, wobei beispielsweise ein erster Filterwert durch die Anwendung eines horizontal orientierten Filters gebildet ist, wobei beispielsweise ein zweiter Filterwert durch die Anwendung eines vertikal orientierten Filters gebildet ist, und wobei beispielsweise ein dritter Filterwert durch die Anwendung eines schräg (zum Beispiel unter einem Winkel von 45°) orientierten Filters gebildet ist. Liegen beispielsweise drei solche Filterwerte vor, so umfassen auch diese drei Filterwerte beispielsweise eine Information über eine Gradientenstärke oder eine Gradientenrichtung. So wird die Richtung nämlich beispielsweise dadurch bestimmt, welcher der genannten drei oder mehr Filterwerte am größten ist. Die Gradientenstärke ist dann beispielsweise durch den größten der Filterwerte oder durch eine Kombination der Filterwerte definiert. Ganz allgemein wird daher unter einer Information über eine Gradientenstärke und eine Gradientenrichtung jede Information, unabhängig von der konkreten Form der Darstellung, verstanden, aus der die Gradientenstärke und die Gradientenrichtung abgeleitet werden können.

Im Folgenden wird beschrieben, wie aus der Information über die Gradientenstärke und die Gradientenrichtung, die beispielsweise unter Verwendung der Schritte 1032 - 1038 erhalten werden kann, oder die beispielsweise auch auf anderem Wege erhalten werden kann, ein lokaler Kantentyp für einen Bildteil bestimmt wird. Das Verfahren 1000 umfasst zu diesem Zweck in einem 5. Schritt 1040 ein Bestimmen eines lokalen Kantentypen, der dem Bildteil beziehungsweise dem Pixel zugeordnet ist, basierend auf der Gradientenstärke und der Gradientenrichtung. Dabei wird eine Zuordnungsvorschrift verwendet. Somit entsteht eine Information 1020 über einen lokalen Kantentyp für ein Bildteil beziehungsweise für ein Pixel.

Details im Hinblick auf die Durchführung des 5. Schritts 1040 werden im Folgenden näher erläutert. Dabei wird unter anderem Bezug genommen auf die Fig. 2B und 3. Die Fig. 2B zeigt eine graphische Darstellung, die eine Aufstellung von Textur-Kantentypen durch Aufteilung des Gradientenstärke-Gradientenwinkel-Wertebereichs in Teilbereiche beschreibt. Ferner zeigt die Fig. 3 eine graphische Darstellung einer Zuordnung von Pixel zu Textur-Kantentypen.

Diesbezüglich sei zunächst angemerkt, dass Gradientenstärke sowie Gradientenrichtung beziehungsweise Gradientenwinkel gemeinsam bestimmen, ob ein Pixel (beziehungsweise Bildteil) zu einer Kante gehört, Teil einer feinen Struktur ist, oder auch Teil einer strukturlosen Fläche ist. Um diese Charakterisierung eines Pixels vorzunehmen, erfolgt bei einem Ausführungsbeispiel der vorliegenden Erfindung eine Zerlegung des zweidimensionalen Wertebereichs der Gradientenstärke und der Gradientenrichtung beziehungsweise des Gradientenwinkels. Diese Art der Zerlegung führt (beim Einsatz des Verfahrens in Verbindung mit einer Identifizierung oder Suche von Bildern) zu besseren Suchergebnissen. Beispielsweise ergeben sich unter Verwendung der beschriebenen Zerlegung bessere Suchergebnisse als dies unter Verwendung eines Kanten-Histogramms, wie es in der US 6,807,298 B1 beschrieben ist, möglich ist.

Bezugnehmend auf die obigen Ausführungen wird im Folgenden davon ausgegangen, dass der Wertebereich für die Gradientenstärke G in einem Bereich zwischen Null und unendlich liegt. In einem realen Ausführungsbeispiel allerdings ist der Wertebereich für die Gradientenstärke freilich nach oben hin beschränkt. Ferner wird davon ausgegangen, dass der Wertebereich für den Gradientenwinkel in einem Bereich zwischen -90° (ausgeschlossen) und +90° (eingeschlossen) liegt. Der Wertebereich eines zweidimensionalen Tupels $(G,\alpha)(j,i)$ wird demgemäß durch die folgende Beziehung beschrieben:

$$(G,\alpha) \in [0,\infty) \times (-90°,90°] = W$$

In anderen Worten, bei einer idealisierten Betrachtung kann die Gradientenstärke nicht-negative reelle Werte annehmen. Der Gradientenwinkel variiert entsprechend einer hier verwendeten Definition von -90° (nicht eingeschlossen) bis 90°

(eingeschlossen). Der entsprechende Sachverhalt ist im Übrigen auch aus der Fig. 2B ersichtlich. Die Fig. 2B zeigt zu diesem Zweck eine graphische Darstellung einer Zahlenebene. Die graphische Darstellung ist in ihrer Gesamtheit mit 250 bezeichnet. In einer ersten Richtung, beschrieben durch eine erste Achse 260, ist die Gradientenstärke angetragen. In einer zweiten Richtung, gekennzeichnet durch eine zweite Achse 262, ist der Gradientenwinkel in einem Wertebereich zwischen -90° und +90° angetragen. Der Wertebereich W ist beispielsweise, wie in Figur 2B dargestellt, in verschiedene Teilbereiche zerlegt. Die Zerlegung erfolgt beispielsweise in disjunkte Teilbereiche, die jedoch (zusammengenommen) den gesamten Wertebereich überdecken.

Der Zerlegung liegt die folgende Erkenntnis zugrunde: es hat sich in Untersuchungen gezeigt, dass vor allem gut sichtbare Kanten in Bildern, wie zum Beispiel eine Silhouette beziehungsweise eine Skyline, oder Kanten von Gebäuden oder Objekten, eine hohe Gradientenstärke haben, während Bereiche mit feinen Texturen, wie zum Beispiel Wasseroberflächen, Baumkronen oder Wolken durch Pixel mit mittlerer Gradientenstärke gekennzeichnet sind. Glatte Flächen oder Flächen mit schwachen Texturen zeichnen sich durch Pixel mit geringer Gradientenstärke aus.

Aufbauend auf diesen Erkenntnissen wird der Wertebereich W bezüglich der Gradientenstärke G beispielsweise in drei Bereiche zerlegt, die in der Fig. 2B gezeigt sind. Dazu werden beispielsweise zwei Schwellwerte $t_u$ (auch mit 102 bezeichnet) und $t_o$ (auch mit 103 bezeichnet) mit $0 < t_u < t_o$ eingeführt. Die beiden Schwellwerte $t_u$ und $t_o$ werden beispielsweise so eingestellt, dass folgende visuelle Klassifikation vorgenommen werden kann:

$0 \le G(j,i) < t_u$ :    Pixel gehört zu einer monotonen Fläche

$t_u \le G(j,i) < t_o$ :    ohne Textur; Pixel gehört zu einer Fläche mit Textur;

$t_o \le G(j,i)$ :    Pixel ist Teil einer gut sichtbaren Kante.

Es sei im Übrigen darauf hingewiesen, das der Wertebereich W, wie in Fig. 2B dargestellt, beispielsweise in neun Einzelbereiche $B_0$ - $B_8$ unterteilt ist. Ist eine Gradientenstärke kleiner als der erste Schwellwert $t_u$, so wird einem Tupel $(G,\alpha)$ unabhängig von dem Gradientenwinkel $\alpha$ der Kantentyp $B_0$ zugewiesen.

Ein Bereich mittlerer Gradientenstärke (in dem $t_u < G < t_o$) und höherer Gradientenstärke (mit $t_u < G$), der Texturen und Kanten repräsentiert, wird bezüglich des Gradientenwinkels $\alpha$ in weitere Teilbereiche unterteilt. Ein Beispiel für eine solche Unterteilung ist die folgende:

$|\alpha(j,i)| < 22,5°$ :    Pixel ist Teil einer vertikalen Kante;

$|\alpha(j,i)| > 67,5°$ :    Pixel ist Teil einer horizontalen Kante;

$22,5° \le \alpha(j,i) \le 67,5°$ :    Pixel ist Teil einer (aufsteigenden) diagonalen Kante;

$-67,5° \le \alpha(j,i) \le -22,5°$ :    Pixel ist Teil einer (absteigenden) diagonalen Kante.

In anderen Worten, bei mittlerer und höherer Gradientenstärke wird einem ersten Winkelbereich (zum Beispiel zwischen -22, 5° und +22,5°) ein Kantentyp zugeordnet, der das Vorliegen einer vertikalen Kante beschreibt. Einem zweiten Winkelbereich (zum Beispiel mit $|\alpha(j,i)| > 67,5°$ wird beispielsweise ein weiterer entsprechender Kantentyp zugeordnet, der anzeigt, dass ein Pixel oder Bildteil Teil einer (lokalen) horizontalen Kante ist.

Weiteren Wertebereichen des Gradientenwinkels werden entsprechende Kantentypen zugeordnet, die anzeigen, dass der Pixel oder Bildteil Teil einer aufsteigenden oder absteigenden diagonalen (lokalen) Kante ist.

Eine Zusammenfassung der oben beschriebenen Zerlegungen des Wertebereichs W in einzelne Teilbereiche $B_0$ - $B_8$, denen korrespondierende Kantentypen zugeordnet sind, ergibt beispielsweise die folgenden neun Teilbereiche (auch mit 104 bezeichnet) des Wertebereichs B:

$B_0 : [0,t_u) \times (-90°,90°]$      Fläche ohne Textur und Kanten;

$B_1 : [t_u,t_o] \times ((-90°,-67,5°) \cup (67,5°,90°])$      horizontale Textur;

$B_2 : [t_u,t_o) \times [-67,5°,-22,5°]$      diagonale (absteigende) Textur;

$B_3 : [t_u,t_o) \times (-22,5°,22,5°)$      vertikale Textur;

$B_4 : [t_u,t_o) \times [22,5°,67,5°]$      diagonale (aufsteigende) Textur;

$B_5 : [t_o,\infty) \times ((-90°,-67,5°) \cup (67,5°,90°])$      horizontale Kante;

$B_6 : [t_o,\infty) \times [-67,5°,-22,5°]$      diagonale (absteigende) Kante;

$B_7 : [t_o,\infty) \times (22,5°,22,5°)$      vertikale Kante;

$B_8 : [t_o,\infty) \times [22,5°,67,5°]$      diagonale (aufsteigende) Kante.

In der Aufzählung ist für jeden der Bereiche $B_0$ - $B_8$ angegeben, auf welchen Kantentyp ("Fläche ohne Textur und Kanten", "horizontale Textur", "Diagonale (absteigende) Textur", "vertikale Textur", "diagonale (aufsteigende) Textur", "horizontale Kante", "diagonale (absteigende) Kante", "vertikale Kante", "diagonale (aufsteigende) Kante") der jeweilige Bereich $B_0$ - $B_8$ abgebildet wird beziehungsweise welchem Kantentyp der jeweilige Bereich $B_0$ - $B_8$ zugeordnet wird. Die genannten Kantentypen können beispielsweise durch einen numerischen Kantentyp-Identifizierer gekennzeichnet sein.

Die obige Aufstellung ist wie folgt zu verstehen: liegt ein Tupel $(G(j,i), \alpha(j,i))$ in dem Bereich $B_k$, so wird dem entsprechenden Pixel beziehungsweise Bildbereich (j,i) der Kantentyp k zugeordnet.

Es sei darauf hingewiesen, dass auch andere Zerlegungen des Wertebereichs W beziehungsweise eine andere Zuordnung zwischen einem Tupel $(G, \alpha)$ und einem Kantentyp gewählt werden kann. Mit zunehmender Gradientenstärke G gewinnt rein wahrnehmungsphysikalisch der Gradientenwinkel eine immer größere Bedeutung. So kann beispielsweise ein Bereich mit höheren Gradientenstärken (beispielsweise mit $G > t_o$), der Kanten in dem Bild 1010 repräsentiert, auch in acht Teilbereiche (statt in vier Teilbereiche) aufgeteilt werden. Dies hat aber zur Folge, dass ein im Folgenden noch näher erläutertes Textur-Kanten-Histogramm in der Anzahl beziehungsweise bezüglich der Anzahl der Histogrammwerte wächst (da dann mehr verschiedene Kantentypen existieren). Somit kann insgesamt festgehalten werden, dass die verschiedenen Teilbereiche $B_\kappa$ mit $0 \leq k \leq 8$ jeweils einen ganz bestimmten Textur-Kantentyp (auch mit 104 bezeichnet) repräsentieren.

Diesbezüglich sei noch einmal explizit darauf hingewiesen, dass der Bereich $B_0$, also der Bereich mit geringer Kantenstärke, eine Fläche ohne Textur und Kanten, repräsentiert. Die Bereiche $B_1$ - $B_4$ mit mittlerer Kantenstärke repräsentieren Texturen mit verschiedenen Textur-Richtungen. Die Bereiche $B_5$ - $B_8$ mit (vergleichsweise) hoher Kantenstärke (größer als $t_o$) repräsentieren ferner Kanten mit verschiedenen Kantenrichtungen. Es sei hier allerdings darauf hingewiesen, dass sowohl Flächen ohne Textur und Kanten, Texturen und Kanten ganz allgemein als "Kanten" beziehungsweise lokale Kanten betrachtet werden, denen entsprechend ein lokaler Kantentyp zugeordnet ist. In anderen Worten, eine Textur wird als eine Kante mit schwächerer Kantenstärke (im Vergleich z einer echten Kante) angesehen, und eine Fläche ohne Textur und Kanten wird als eine Kante mit sehr geringer Kantenstärke (schwächer als bei einer Textur) angesehen.

Zusammenfassend kann im Übrigen festgehalten werden, dass jedem Pixel des Bildes über eine ihm zugeordnete Gradientenstärke und einen ihm zugeordneten Gradientenwinkel genau ein Teilbereich $B_k$, beispielsweise mit $0 \leq k \leq 8$, und somit ein eindeutiger Textur-Kantentyp (auch als Kantentyp bezeichnet und in Fig. 3 mit 104 referenziert) zugeordnet werden kann. Im Folgenden werden beispielsweise Pixel durch ihren Textur-Kantentyp 104 repräsentiert.

Der Textur-Kantentyp 104 wird im Übrigen auch als lokaler Kantentyp 1020 für einen Bildteil beziehungsweise für ein Pixel bezeichnet.

Im Folgenden wird im Übrigen davon ausgegangen, dass lokale Kantentypen 1020 für eine Mehrzahl von Bildteilen beziehungsweise für eine Mehrzahl von Pixeln bestimmt werden. Bei einem Ausführungsbeispiel der vorliegenden Erfindung werden sowohl über das ganze Bild als auch über bestimmte rechteckige Bereiche des Bildes Histogramme gebildet, die die Häufigkeit der Textur-Kantentypen der darin enthaltenen Pixel angeben. Daraus kann dann ein Gesamt-Histogramm gebildet werden. Die genannte Vorgehensweise ist zwar grundsätzlich anwendbar, führt aber nicht zu optimalen Ergebnissen, denn auf diese Weise werden die Eigenschaften der einzelnen Bildteile beziehungsweise Pixel isoliert betrachtet. Kanten und Texturen sind jedoch Ergebnis einer Ansammlung benachbarter Pixel mit bestimmten Eigenschaften. So wird beispielsweise eine horizontale Kante erst dann eine deutlich sichtbare horizontale Kante, wenn in horizontaler Richtung benachbarte Pixel auch die Kanteneigenschaft horizontale Kante haben. Um diesen Sachverhalt zu berücksichtigen werden bei einem Ausführungsbeispiel der vorliegenden Erfindung die Textur-Kantentypen in dem Bild blockweise erfasst, wie dies im Folgenden beschrieben wird.

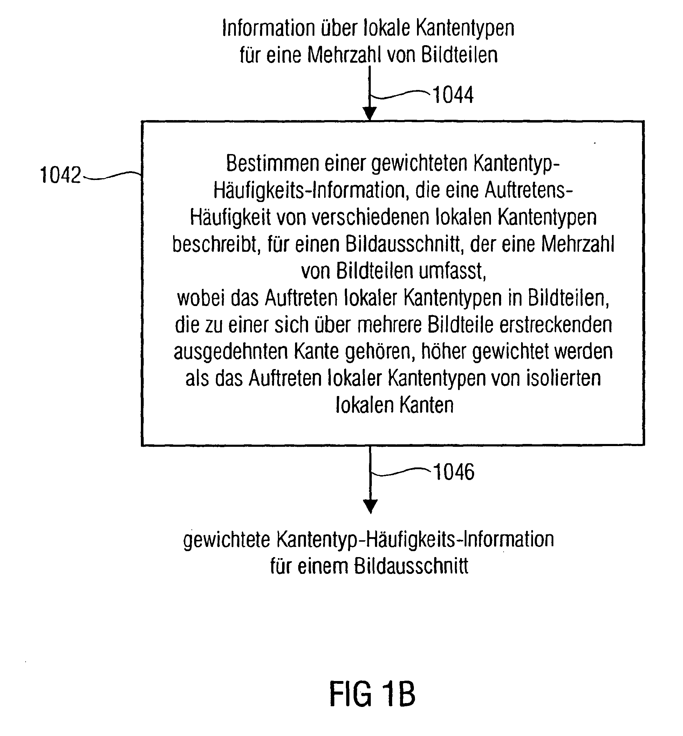

Somit wird das Verfahren 1000 gemäß Fig. 1A - 1D im Anschluss an die Durchführung des 5. Schrittes 1040 bevorzugt mit dem 6. Schritt 1042 fortgesetzt, der in Fig. 1B gezeigt ist. Basierend auf einer Information 1044 über lokale Kantentypen für eine Mehrzahl von Bildteilen wird in dem 6. Schritt 1042 eine gewichtete Kantentyp-Häufigkeitsinformation 1046 für einen Bildausschnitt bestimmt. Ein Bildausschnitt umfasst dabei eine Mehrzahl von Bildteilen, also beispielsweise eine Mehrzahl von Pixeln. Ein entsprechender Bildausschnitt ist im Rahmen der vorliegenden Beschreibung zum Teil auch als "Block" bezeichnet. Der 6. Schritt 1042 umfasst ein Bestimmen einer gewichteten Kantentyp-Häufigkeitsinformation, die eine Auftretens-Häufigkeit von verschiedenen lokalen Kantentypen beschreibt, für einen Bildausschnitt, der eine Mehrzahl von Bildteilen umfasst. Das Auftreten lokaler Kantentypen in Bildteilen, die zu einer sich über mehrere Bildteile erstreckenden ausgedehnten Kante gehören, wird dabei höher gewichtet als das Auftreten lokaler Kantentypen von isolierten lokalen Kanten.

In anderen Worten, es wird eine Kantentyphäufigkeitsinformation bestimmt, die für die verschiedenen möglichen Kantentypen (beispielsweise in Form einer Histogramm-Darstellung) angibt, wie oft die entsprechenden Kantentypen in den zu dem Bildausschnitt gehörenden Bildteilen vorkommen. Dabei wird allerdings nicht jedes Auftreten eines bestimmten Kantentyps notwendigerweise einfach gezählt. Vielmehr wird das Auftreten eines Kantentyps in einem Bildteil, der zu einer sich über mehrere Bildteile erstreckenden ausgedehnten Kante gehört, höher gewichtet gezählt (also mehr als einfach, zum Beispiel zweifach, gewichtet und gezählt). Dadurch werden, wie schon oben erläutert, räumlich ausgedehnte Kanten, die sich über mehrere (beispielsweise benachbarte) Bildteile erstrecken bei der Bildung der gewichteten Kantentyphäufigkeitsinformation besonders stark gewichtet.

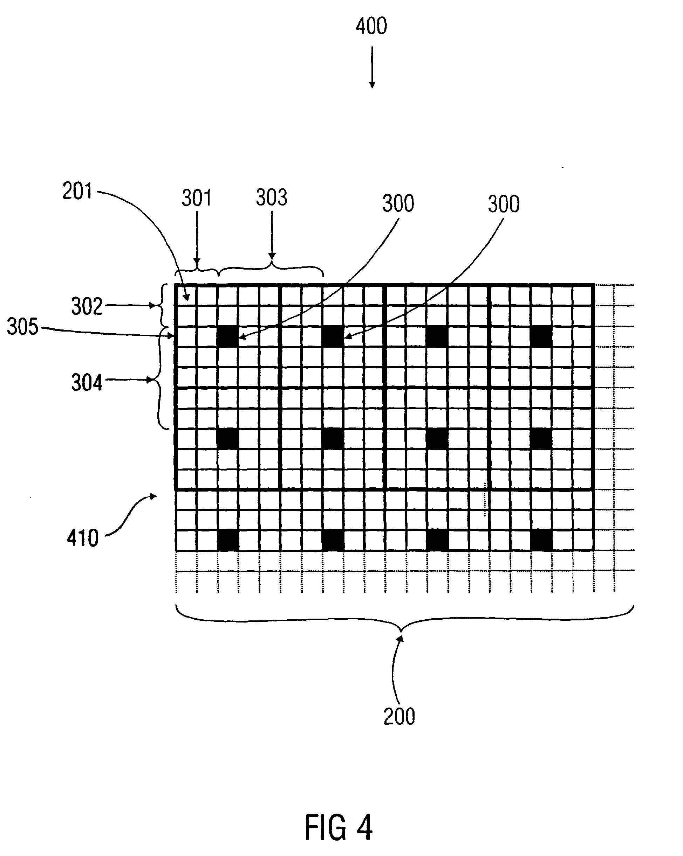

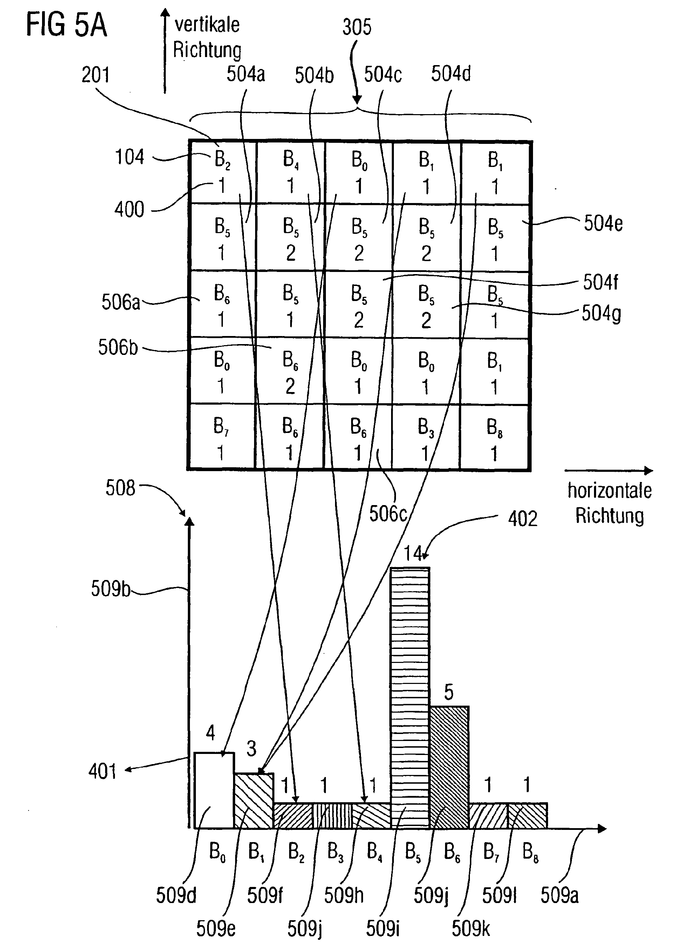

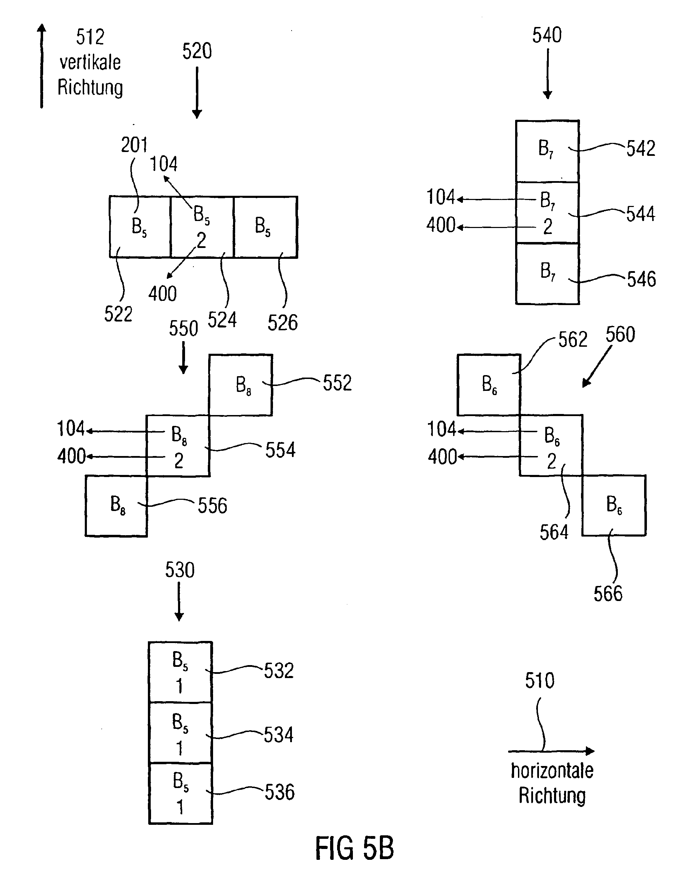

Im Folgenden wird anhand der Fig. 4, 5A und 5B erläutert, wie die gewichtete Kantentyp-Häufigkeitsinformation 1046 gewonnen werden kann. Fig. 4 zeigt dazu eine graphische Darstellung eines Gitternetzes mit Blöcken. Die graphische Darstellung der Fig. 4 ist in ihrer Gesamtheit mit 400 bezeichnet. Die graphische Darstellung 400 zeigt ein Gitternetz 410. Das Gitternetz kann zum Beispiel eine Anordnung von Bildpunkten beziehungsweise Pixeln definieren, wobei ein Pixel mit 201 bezeichnet ist.

In einem möglichen (optionalen) Verfahrensschritt wird ein zweidimensionales Gitternetz 410, bestehend aus Gitterpunkten 300, über das Bild gelegt. Dies ist in der graphischen Darstellung der Fig. 4 dargestellt. Von einem Anfangspixel, das durch einen Versatz sowohl in horizontaler (301) als auch einen Versatz in vertikaler Richtung (302) bestimmt wird, werden beispielsweise in festen Schrittweiten sowohl in horizontaler (303) als auch in vertikaler Richtung (304) Pixel als Gitterpunkte ausgewählt. Die Pixelkoordinaten eines zweidimensionalen (ausgewählten) Gitterpunktes $GP(j_G, i_G)$ (auch mit 300 bezeichnet) können beispielsweise folgendermaßen bestimmt werden:

$$GP(j_G, i_G) = (\textit{offset}_y + j_G \cdot d_y, \textit{offset}_x + i_G \cdot d_x)$$

Um jeden der genannten Gitterpunkte wird beispielsweise (optional) ein quadratischer Block 305 von Pixeln derart gelegt, dass ein Mittelpunkt des Blocks mit dem Gitterpunkt 300 zusammenfällt. Idealerweise hat der Block eine ungerade Seitenlänge in Pixeln. Fig. 4 zeigt die Blockbildung. Der Versatz 301, 302 bei dem Gitternetz 410 wird beispielsweise so gewählt, dass auch um die erste Reihe und um die erste Spalte der Gitterpunkte 300 ein vollständiger Block gelegt werden kann. Ebenso sollten die Gitterpunkte der letzten Reihe und/oder der letzten Spalte so definiert sein, dass um diese noch ein vollständiger Block gelegt werden kann.

Die Schrittweiten $d_x$ (auch mit 303 bezeichnet) und $d_y$ (auch mit 304 bezeichnet) sollten idealerweise so groß wie die Seitenlänge der Blöcke 305 gewählt werden, um eine vollständige Überdeckung des Bildes mit Blöcken zu gewährleisten und die Anzahl der Blöcke zu minimieren. Die Schrittweiten können aber auch kleiner gewählt werden, was zu mehr Blöcken aber auch zu einem höheren Analyseaufwand führt.

Für die Koordinaten $(j_G, i_G)$ eines Gitterpunktes ergibt sich beispielsweise folgender möglicher Wertebereich:

```
0 ≤ j_G < (int)((image.Height - block-Height + 1)/d_y);
```

```
0 ≤ i_G < (int) (image.Width - block.Width + 1)/d_x).
```

Dabei bedeuten block.Width die Breite des Blockes (beispielsweise in horizontaler Richtung) und block.Height die Höhe des Blockes (beispielsweise in vertikaler Richtung) in Pixeln. (int) bedeutet "der ganzzahlige Wert des Quotienten". Jeder Block wird durch die Vorgabe des Gitterpunktes durch die beiden Koordinaten $(j_G, i_G)$ eindeutig bestimmt.

In der obigen Beschreibung wurde erläutert, wie eine günstige Aufteilung des Bildes (z. B. des Bildes 1010) in eine Mehrzahl von Blöcken erreicht werden kann. Die Blöcke wurden beispielsweise so gewählt, dass die Blöcke das Bild sowohl in horizontaler Richtung als auch in vertikaler Richtung lückenfrei abdecken, ohne sich gegenseitig zu überlappen. Der Block wird dabei durch zwei Indizes $j_G$ und $i_G$ eindeutig identifiziert. Es sei allerdings darauf hingewiesen, dass die Blöcke von Bildteilen (z. B. Blöcke von Pixeln), in die das Bild 1010 aufgeteilt ist, auch auf andere Weise gewählt werden können. So können die Blöcke, in die das Bild 1010 aufgeteilt sind, beispielsweise vordefiniert sein. Die Blöcke von Pixeln können im Übrigen überlappend oder nicht-überlappend sein. Ebenso ist es möglich, dass Zwischenräume zwischen zwei benachbarten Blöcken bestehen. Für das Verständnis der folgenden Beschreibung ist es lediglich von Bedeutung, dass das Bild zumindest einen Block von Bildteilen beziehungsweise einen Block von Pixeln aufweist, wobei der Block von Bildteilen beziehungsweise Block von Pixeln eine Mehrzahl von Pixeln umfasst. Weiterhin wird es bevorzugt, dass ein Block von Pixeln eine Mehrzahl von benachbarten Pixeln definiert, die eine zusammenhängende Pixelfläche bilden. Dies ist allerdings nicht notwendigerweise erforderlich. Ferner wird die Verarbeitung erleichtert, wenn ein Block von Pixeln einen quadratischen oder rechteckigen Bildausschnitt definiert. Auch dies ist allerdings nicht zwingend erforderlich. Wird somit ein Block von Pixeln beziehungsweise ein Bildausschnitt definiert, so besteht ein darauffolgender Verfahrensschritt (beispielsweise der sechste Schritt 1042) darin, Textur-Kantentyphäufigkeiten für jeden Block (oder zumindest für einen Block, oder für eine Mehrzahl von Blöcken) zu berechnen. Dabei wird für jedes Pixel des Blocks ein (zugehöriger) Textur-Kantentyp 104 bestimmt, beispielsweise (aber nicht notwendigerweise) unter Verwendung der Schritte 1032 bis 1040), und daraus für den gesamten Block die gewichteten Häufigkeiten 401 der - in dem beschriebenen Beispiel: 9 - auftretenden Textur-Kantentypen berechnet (vgl. Fig. 5A).

Die Gewichtung der Textur-Kantentypen hat folgenden Hintergrund: Kanten nehmen im Vergleich zu Texturen nur wenig Fläche in Anspruch, werden aber intensiver wahrgenommen. Dies ist der Grund, warum Pixel, die Teil einer Kante und nicht Teil einer Textur sind, also Pixel, die beispielsweise zu den Textur-Kantentypen $B_5$ bis $B_8$ gehören, bei einem Ausführungsbeispiel, eine höhere Gewichtung erhalten. Um auch sicherzustellen, dass der entsprechende Pixel wirklich Teil einer Kante ist, wird beispielsweise eine höhere Gewichtung, beispielsweise mit einem Gewichtungsfaktor von Zwei (vgl. Bezugszeichen 400), dann (beziehungsweise nur dann) verwendet, wenn die in der Kantenrichtung benachbarten Pixel auch vom gleichen Textur-Kantentyp sind. Fig. 5B stellt dies für vier Kantentypen dar.

Fig. 5A stellt die Gewichtung des Auftretens von Kantentypen graphisch dar. Zu diesem Zweck zeigt die Fig. 5A einen Ausschnitt aus einer Darstellung, die einzelnen Bildteilen (oder Pixeln) zugeordnete Kantentypen beschreibt. In der Fig. 5A ist ein Block 305 dargestellt, der beispielsweise 5 x 5 Pixel (gekennzeichnet durch die in dem Block 5 enthaltenen Quadrate) umfasst. Jedem der Pixel, von denen eines beispielsweise mit 201 bezeichnet ist, ist ein Textur-Kantentyp 104 (aus einem Bereich zwischen $B_0$ und $B_8$) sowie ein Gewichtungsfaktor beziehungsweise eine Gewichtung 400 (zum Beispiel ein Wert von 1 oder 2) zugeordnet. Ein Bildteil oder Pixel wird bei einem Ausführungsbeispiel der vorliegenden Erfindung höher gewichtet, wenn der Bildteil oder das Pixel Teil einer ausgedehnten Kante ist, die sich über mehrere Bildteile oder Pixel erstreckt. Dabei wird vorausgesetzt, dass eine ausgedehnte Kante eine Länge aufweist, die zumindest gleich einer vorgegebenen minimalen Länge ist. Beispielsweise kann definiert sein, dass eine ausgedehnte Kante nur dann vorliegt, wenn sich eine linienförmige Kante über zumindest drei Pixel erstreckt. Ferner sei darauf hingewiesen, dass beispielsweise mehrere Pixel nur dann als zu einer gemeinsamen ausgedehnten Kante gehörig klassifiziert werden, wenn die genannten (zum Beispiel mindestens drei) Pixel den gleichen Kantentyp aufweisen. Ferner kann diesbezüglich noch überprüft werden, ob die Pixel mit dem gleichen Kantentyp in einer Richtung benachbart zueinander angeordnet sind, die dem Kantentyp der Pixel entspricht. Dieses Konzept wird im Folgenden bezugnehmend auf die Fig. 5B erläutert. Fig. 5B zeigt zu diesem Zweck eine schematische Darstellung von je drei benachbart angeordneten Pixeln. Eine erste Richtung (zum Beispiel horizontale Richtung) ist mit 510 bezeichnet und eine zweite Richtung (zum Beispiel vertikale Richtung) ist mit 512 bezeichnet. Eine erste graphische Darstellung 520 zeigt drei Pixel 522, 524, 526, die in horizontaler Richtung nebeneinander (zum Beispiel benachbart, möglicherweise aber auch voneinander beabstandet) angeordnet sind. Alle drei Pixel 522, 524, 526 weisen den Kantentyp $B_5$ auf, der eine (lokale) horizontale Kante anzeigt. In anderen Worten, das Pixel 522 ist Teil einer lokalen horizontalen Kante, ebenso wie das Pixel 524 und das Pixel 526. Da die Pixel 522, 524, 526 in horizontaler Richtung nebeneinander beziehungsweise in einer Linie bzw. entlang einer Linie angeordnet sind, sind die Pixel 522, 524, 526 zudem Teil einer ausgedehnten horizontalen Kante. Aus diesem Grund wird dem mittleren der Pixel, also dem Pixel 524, der Gewichtungsfaktor 2 zugeordnet (vgl. Bezugszeichen 400). Eine weitere graphische Darstellung 530 zeigt drei Pixel 532, 534, 536, die in vertikaler Richtung nebeneinander angeordnet sind und alle den Kantentyp $B_5$ ("horizontale Kante") aufweisen. In diesem Fall liegen zwar drei Pixel mit dem gleichen Kantentyp in einer Linie, der Kantentyp (hier: "horizontale Kante") entspricht aber nicht der Richtung, entlang derer die Pixel angeordnet sind (hier: vertikale Richtung). Folglich erhalten die Pixel 532, 534, 536 die Gewichtung 1.

In ähnlicher Weise zeigt eine schematische Darstellung 540 drei Pixel 542, 544, 546, die den Kantentyp $B_7$ ("vertikale Kante") aufweisen, und die in vertikaler Richtung nebeneinander liegen. Entsprechend wird dem zentralen Pixel 544 der Gewichtungsfaktor 2 zugeordnet.

Die schematische Darstellung 550 zeigt drei Pixel 552, 554, 556, die in einer diagonalen aufsteigenden Richtung (in der Zeichnung nach rechts oben) nebeneinander beziehungsweise benachbart angeordnet sind. Da die drei Pixel 552, 554, 556 alle den Kantentyp $B_8$ aufweisen, der eine lokale diagonale (aufsteigende) Kante anzeigt, wird dem zentralen Pixel 552 der Gewichtungsfaktor 2 zugeordnet (vergleiche Bezugszeichen 400).

Eine weitere schematische Darstellung 560 zeigt drei Pixel 562, 564, 566, die in einer diagonal absteigenden Richtung (in der Zeichnung; nach rechts unten) nebeneinander angeordnet sind. Da allen Pixeln 562, 564, 566 der Kantentyp $B_6$ (diagonale absteigende Kante) zugeordnet ist, wird dem zentralen Pixel 564 der Gewichtungsfaktor 2 zugeordnet.

Eine entsprechende Gewichtung der Kantentypen ist auch in der graphischen Darstellung der Fig. 5A gezeigt. So zeigt die graphische Darstellung der Fig. 5A beispielsweise fünf Pixel 504a, 504b, 504c, 504d, 504e, die alle entlang einer horizontalen Richtung nebeneinander liegen. Somit wird beispielsweise festgestellt, dass in einer horizontalen Richtung neben dem Pixel 504b zwei Pixel 504a, 504c liegen, wobei alle genannten Pixel 504a, 504b, 504c, den Kantentyp "horizontale Kante" aufweisen. Daher wird dem Auftreten des Kantentyps "horizontale Kante" in dem Pixel 504b ein Gewichtungsfaktor von 2 zugeordnet. Aus demselben Grund wird auch dem Auftreten des Kantentyps "horizontale Kante" in den Pixel 504c der Gewichtungsfaktor 2 zugeordnet. Das gleiche gilt für die Gewichtung des Kantentyps "horizontale Kante" in dem Pixel 504d.

In entsprechender Weise wird festgestellt, dass ein Pixel 506b zwischen Pixeln 506a und 506c liegt, wobei die Pixel 506a, 506b, 506c entlang einer diagonal absteigenden Linie angeordnet sind, und wobei den Pixeln 506a, 506b, 506c der gleiche Kantentyp "diagonale absteigende Kante" zugeordnet ist.

Wird somit für einen Block ein Kantentyp-Histogramm erstellt, so gibt dieses die gewichtete Auftretens-Häufigkeit der einzelnen Kantentypen wider. Ist einem Pixel ein Gewichtungsfaktor ungleich 1 zugeordnet, so wird der Kantentyp bei dem betreffenden Pixel entsprechend dem Gewichtungsfaktor mehrfach gezählt. Weist beispielsweise das Pixel 504b einen Gewichtungsfaktor von 2 auf, so liefert der dem Pixel 504b zugeordnete Kantentyp einen Beitrag von 2 zu dem Histogramm. In anderen Worten, es wird verfahren, als wäre das Pixel 504b zweifach vorhanden. Ein Histogramm, das basierend auf dem Block 305 gebildet ist, ist im Übrigen mit 508 bezeichnet. Eine Abszisse 509a beschreibt, wie oft die entsprechenden Kantentypen in dem Block 305 (unter Berücksichtigung der Gewichtungsfaktoren 400) auftreten. Säulendiagramme 509d - 509l geben beispielsweise an, wie oft die entsprechenden Kantentypen in dem Block 305 auftreten. So treten beispielsweise die Kantentypen $B_2$, $B_3$, $B_4$, $B_7$, $B_8$ jeweils nur einmal in dem Block 305 auf. Der Kantentyp $B_1$ tritt in dem Block 305 dreimal auf. Der Kantentyp $B_0$ tritt in dem Block 305 viermal auf. Der Kantentyp $B_6$ tritt in dem Block 305 zwar nur viermal auf, aufgrund der zweifachen Gewichtung des Pixels 506b ergibt sich in dem Histogramm 508 für den Kantentyp $B_6$ dennoch ein gewichteter Häufigkeitswert von 5 (3 x 1 plus 1 x 2). Der Kantentyp $B_5$ tritt in dem Block 305 (ungewichtet) 9 x auf, durch die doppelte Gewichtung der Pixel 504b, 504c, 504e, 504f, 504g, ergibt sich allerdings ein gewichteter Häufigkeitswert von 14 für den Kantentyp $B_5$ (4 x 1 plus 5 x 2 = 14).

Gemäß einem Ausführungsbeispiel der vorliegenden Erfindung kann der Mechanismus zur Berechnung der gewichteten Kantenhäufigkeitsinformation beziehungsweise des gewichteten Kantentyp-Histogramms wie folgt beschrieben werden: es wird ein Block von Bildteilen (zum Beispiel Pixeln) ausgewählt, für den dann die Kantentyphäufigkeitsinformation bestimmt wird. Anschließend wird für mehrere einzelne Bildteile überprüft, ob diesen eine höhere Gewichtung als eine standardmäßige Gewichtung zugeordnet werden soll (wobei die standardmäßige Gewichtung beispielsweise 1 oder ein anderer vorgegebener Standard-Gewichtungswert ist). Wird festgestellt, dass entlang einer Linie, die durch den betrachteten Bildteil verläuft, in einer bestimmten bzw. vorgegebenen Umgebung des betrachteten Bildteils zumindest eine vorgegebene Mindestanzahl von weiteren Bildteilen liegt, die den gleichen Kantentyp aufweisen wie der betrachtete Bildteil, und wird ferner festgestellt wird, dass die Richtung der genannten Linie dem Kantentyp entspricht, so wird dem betrachteten Bildteil ein höherer Gewichtungsfaktor als der Standard-Gewichtungsfaktor zugewiesen. Andernfalls wird der Gewichtungsfaktor auf den Standard-Gewichtungsfaktor gesetzt beziehungsweise unverändert gelassen.

Beispielsweise kann zunächst geprüft werden, welchen Kantentyp der betrachtete Bildteil aufweist. Dementsprechend kann dann beispielsweise entschieden werden, entlang welcher Richtung benachbarte Bildteile im Hinblick auf ihre Kantentypen zu überprüfen sind. Wird beispielsweise festgestellt, dass dem betrachteten Bildteil der Kantentyp "horizontale Kante" zugeordnet ist, so werden beispielsweise benachbarte Bildteile untersucht bzw. geprüft, die in einer horizontalen Richtung neben dem betrachteten Bildteil angeordnet sind. Bildteile, die in anderen Richtungen neben dem betrachteten Bildteil angeordnet sind, werden in diesem Fall beispielsweise nicht berücksichtigt. Weisen die beiden in horizontaler Richtung benachbarten Bildteile gleiche Kantentypen auf, wie der betrachtete Bildteil, also beispielsweise ebenfalls einen horizontalen Kantentyp, so wird darauf geschlossen, dass der betrachtete Bildteil, Teil einer ausgedehnten Kante ist. Entsprechend wird der Gewichtungsfaktor des betrachteten Bildteils erhöht. Andernfalls wird der Gewichtungsfaktor für den betrachteten Bildteil unverändert belassen.

Im Übrigen wird darauf hingewiesen, das bei einem Ausführungsbeispiel manchen Kantentypen stets ein geringer Gewichtungsfaktor zugeordnet ist. Beispielsweise können Kantentypen mit geringer bis mittlerer Kantenstärke stets mit einem Standard-Gewichtungsfaktor (beispielsweise von 1) gewichtet werden, während hingegen nur bei Kantentypen mit einer großen Kantenstärke eine höhere Gewichtung erfolgen kann. Somit umfasst die Entscheidung über einen Gewichtungsfaktor eines betrachteten Bildteils auch eine Entscheidung darüber, ob einem bestimmten Kantentyp überhaupt ein höherer Gewichtungsfaktor als der Grund-Gewichtungsfaktor beziehungsweise Standard-Gewichtungsfaktor zukommen kann.

Nachdem für einen Block von Bildteilen eine gewichtete Kantentyp-Häufigkeitsinformation 1046, wie oben beschrieben, gebildet wurde, kann einem Block von Bildteilen somit ein Block-Kantentyp zugeordnet werden. Beispielsweise kann einem Block von Bildteilen, also einem Bildausschnitt, als Blockkantentyp ein Kantentyp zugewiesen werden, dem in der gewichteten Kantentyp-Häufigkeitsinformation ein maximaler Häufigkeitswert zugeordnet ist. Diese Zuordnung kann beispielsweise in einem 7. Schritt 1048 erfolgen. In anderen Worten, aus der Textur-Kantentyp-Häufigkeit eines Blocks (also beispielsweise aus der gewichteten Kantentyp-Häufigkeitsinformation beziehungsweise aus dem gewichteten Kantentyp-Histogramm) eines Blocks wird nun der Textur-Kantentyp als der für den Block repräsentative Textur-Kantentyp gewählt, der den höchsten gewichteten Häufigkeitswert hat. In anderen Worten, es wird beispielsweise in dem Histogramm 508 gemäß Fig. 5A der Kantentyp (zum Beispiel der Kantentyp $B_5$) identifiziert, dem der höchste gewichtete Häufigkeitswert (hier: 14) zukommt. Somit wird entschieden, dass dem Block (beispielsweise dem Block 305) der Block-Kantentyp $B_5$ zugeordnet ist. Sind zwei gewichtete Häufigkeitswerte (von zwei verschiedenen Kantentypen) gleich, so wird beispielsweise nach folgendender Reihenfolge der repräsentative Textur-Kantentyp (auch mit dem Bezugszeichen 402 bezeichnet) ausgewählt:

$B_5$ - $B_8$ geht vor $B_1$ bis $B_4$, und dies vor $B_0$; und

dann in der Reihenfolge horizontal, vertikal, diagonal aufsteigend, diagonal absteigend.

Auf diese Weise wird jedem Block (beispielsweise mit Block ($j_G,i_G$) bezeichnet) und damit dem entsprechenden Gitterpunkt GP($j_G,i_G$) eindeutig ein Textur-Kantentyp zugeordnet.

In anderen Worten, es existiert eine vorgegebene Reihenfolge, wie der Block-Kantentyp bestimmt wird, wenn mehrere Kantentypen einen gleichen gewichteten Häufigkeitswert aufweisen. Kantentypen, denen eine größere Kantenstärke, beziehungsweise Gradientenstärke zugeordnet ist, werden gegenüber Kantentypen, denen eine geringere Kantenstärke, beziehungsweise Gradientenstärke zugeordnet ist, bevorzugt. Dementsprechend werden die Kantentypen $B_5$ bis $B_8$, denen eine große Gradientenstärke zugeordnet ist, gegenüber den Kantentypen $B_1$ bis $B_4$, denen eine mittlere Gradientenstärke zugeordnet ist, bevorzugt, und es werden ferner die Kantentypen $B_1$ bis $B_4$, denen eine mittlere Gradientenstärke zugeordnet ist, vor dem Kantentyp $B_0$, dem eine geringe Gradientenstärke zugeordnet ist, bevorzugt. Ferner existiert eine vorgegebene Präferenz-Reihenfolge im Hinblick auf die Kantenrichtungen. Ein Kantentyp, dem eine horizontale Kantenrichtung zugeordnet ist, wird gegenüber einem Kantentyp, dem eine vertikal Kantenrichtung zugeordnet ist, bevorzugt. Ein Kantentyp, dem eine vertikale Kantenrichtung zugeordnet ist, wird gegenüber einem Kantentyp, dem eine diagonal aufsteigende Kantenrichtung zugeordnet ist, bevorzugt und ein Kantentyp, dem eine diagonal aufsteigende Kantenrichtung zugeordnet ist, wird gegenüber einem Kantentyp, dem eine diagonal absteigende Kantenrichtung zugeordnet ist, bevorzugt. Ganz allgemein kann auch festgehalten werden, dass Kantentypen, deren Kantenrichtung parallel zu den Bildrändern des Bildes ist, gegenüber Kantenrichtungen, deren Kantenrichtung schräg zu den Bildrändern des Bildes ist, bevorzugt werden.

Im Rahmen des anhand der Fig. 1A bis 1D beschriebenen Ausführungsbeispiels werden im Übrigen Block-Kantentypen für mehrere Blöcke berechnet. Die Berechnung kann beispielsweise für alle Blöcke in gleicher Weise erfolgen.

In einem achten Schritt 1050 wird basierend auf den Block-Kantentypen für eine Mehrzahl von Blöcken (bevorzugt für zumindest drei Blöcke, oder sogar für zumindest vier Blöcke) ein Gruppen-Histogramm bestimmt, das eine Häufigkeit von verschiedenen Kantentypen unter den Block-Kantentypen für die zu der Gruppe gehörigen Blöcke beschreibt. Mit anderen Worten, mehrere Blöcke, für die jeweils ein Block-Kantentyp ermittelt wurde, werden logisch zu einer Gruppe von Blöcken zusammengefügt. Für die Gruppe von Blöcken wird daraufhin ein Gruppen-Histogramm erstellt. Dabei wird für jeden Block nur ein dem Block zugeordneter Blockkantentyp berücksichtigt. In anderen Worten, es wird ein Histogramm erstellt, wie oft die verschiedenen Kantentypen unter den Block-Kantentypen auftreten.

In anderen Worten, der nächste Verfahrensschritt betrifft die Generierung von Textur-Kanten-Teilhistogrammen (auch als Gruppen-Histogramm bezeichnet). Hierzu wird das Bild beispielsweise in Bildrechtecke (mit dem Bezugszeichen 500 bezeichnet) zerlegt. Die Bildrechtecke bedecken beispielsweise insgesamt das Bild. Die Bildrechtecke selbst können sich auch selbst überlappen. Hierbei sind verschiedene Varianten denkbar: zum Beispiel 3 x 3 oder 4 x 4 gleich große Rechtecke, oder 2 x 2 gleich große Rechtecke und zentriert im Bild ein weiteres gleich großes Rechteck, wodurch der mittlere Bereich des Bildes übergewichtet wird. Bei einem im Folgenden beschriebenen Beispiel wird das Bild in 2 x 2 gleich große Rechtecke $R_0$ bis $R_3$ zerlegt.

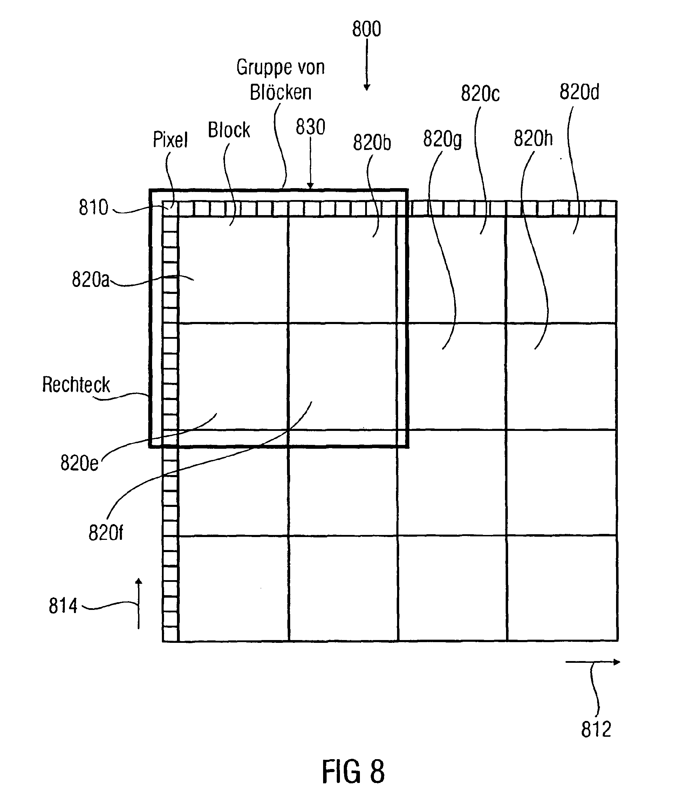

Für Details in Hinblick auf die Zerlegung eines Bildes wird zur Verdeutlichung auf die Fig. 8 verwiesen. Fig. 8 zeigt eine graphische Darstellung eines Bildes, das in Pixel, Blöcke und Gruppen von Blöcken aufgeteilt ist.

Fig. 8 zeigt eine graphische Darstellung eines Bildes, das in eine Mehrzahl von verschiedenen Unter-Einheiten aufgeteilt ist. Das Bild gemäß der Fig. 8 ist in seiner Gesamtheit mit 800 bezeichnet. Das Bild 800 umfasst eine Vielzahl von Pixeln 810, die ein Gitter von Pixeln bilden. Die Pixel sind bevorzugt in Pixelzeilen, die beispielsweise in einer horizontalen Richtung 812 verlaufen, und Pixelspalten, die beispielsweise in einer vertikalen Richtung 814 verlaufen, angeordnet. Jedem Pixel ist im Übrigen typischerweise genau ein Kantentyp zugeordnet. Allerdings können Pixel existieren, denen kein Kantentyp zugeordnet ist, beispielsweise Pixel entlang der Bildränder des Bildes 800. Eine Mehrzahl von Pixeln bildet einen Block. Verschiedene Blöcke sind mit 820a bis 820f bezeichnet. Jeder Block 820a bis 820f besteht aus einer Mehrzahl von Pixeln. So kann ein Block beispielsweise aus einer rechteckigen oder quadratischen Anordnung von einzelnen Pixeln bestehen. Jedem Block ist beispielsweise eine Information über gewichtete Textur-Kantentyp-Häufigkeiten (also beispielsweise eine Darstellung eines Histogramms, die so viele einzelne Werte aufweist, wie Kantentypen definiert sind) zugeordnet. Ferner ist jedem der Blöcke 820a bis 820f ein repräsentativer Textur-Kantentyp zugeordnet, der auch als Block-Kantentyp bezeichnet wird. Zudem sind im Hinblick auf das Bild 800 beispielsweise mehrere Gruppen von Blöcken definiert. Eine erste Gruppe von Blöcken ist mit 830 bezeichnet und umfasst beispielsweise die Blöcke 820a, 820b, 820e und 820f. Eine zweite Gruppe von Blöcken, die aus Gründen der Übersichtlichkeit nicht separat gekennzeichnet ist, umfasst beispielsweise die Blöcke 820c, 820d, 820g und 820h. Die verschiedenen Gruppen von Blöcken sind beispielsweise jeweils rechteckig und umfassen jeweils eine Mehrzahl von Blöcken. Ein Gruppe von Blöcken wird im Übrigen im Rahmen der vorliegenden Beschreibung auch als "Rechteck" bezeichnet. Es sei ferner darauf hingewiesen, dass für jede Gruppe von Blöcken ein sogenanntes Textur-Kanten-Teilhistogramm erstellt werden kann.

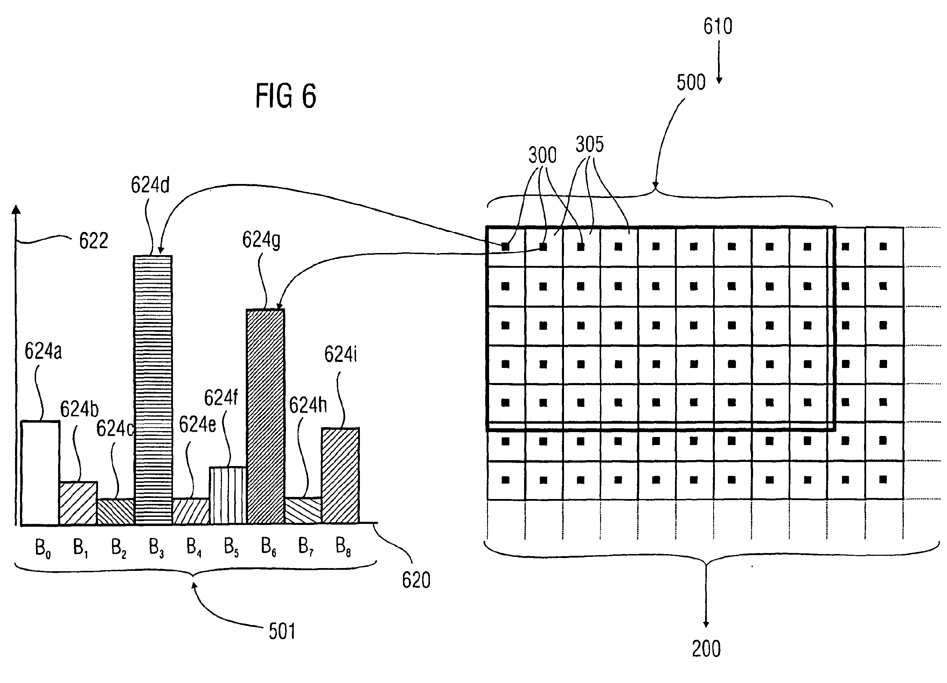

Zur weiteren Veranschaulichung wird auch auf die Fig. 6 verwiesen. Die Fig. 6 zeigt in einer graphischen Darstellung 610 einen Ausschnitt aus einem Bild. Einzelne Blöcke, die beispielsweise um ausgewählte Gitterpunkte 300 herum gebildet sind, sind mit 305 bezeichnet. Ein Gruppe von Blöcken beziehungsweise ein Bildrechteck ist ferner mit 500 bezeichnet und umfasst beispielsweise 9 x 6 Blöcke 305.

Die Fig. 6 zeigt ferner eine graphische Darstellung eines Textur-Kanten-Teilhistogramms 501. An einer Abszisse 620 sind beispielsweise die einzelnen Kantentypen $B_0$ - $B_8$ angetragen, während eine Ordinate 622 eine Häufigkeit der verschiedenen Kantentypen $B_0$ - $B_8$ beschreibt. Balken 624a bis 624i beschreiben die Häufigkeiten der verschiedenen Block-Kantentypen unter den Blöcken 305 des Bildrechtecks 500.

Wird davon ausgegangen, dass das Bild 1010 in eine Mehrzahl von Rechtecken beziehungsweise in eine Mehrzahl von Gruppen von Blöcken zerlegt ist, so wird für jedes dieser Rechtecke (beziehungsweise für jede dieser Gruppe von Blöcken) ein Textur-Kanten-Teilhistogramm 501 folgendermaßen generiert: es wird die Häufigkeit des Textur-Kantentyps der Blöcke "Block $(j_G,i_G)$" bestimmt, deren Gitterpunkt GP $(j_G, i_G)$ in dem Rechteck enthalten ist. Bei dem beschriebenen Beispiel wird für jedes Rechteck ein Textur-Kanten-Teilhistogramm mit 9 Werten erzeugt, die beispielsweise nach Division durch die Gesamtzahl der in dem betreffenden Rechteck enthaltene Gitterpunkte normiert werden. Man erhält somit bei dem beschriebenen Beispiel (wobei das Bild in 2 x 2 gleich große Rechtecke $R_0$ bis $R_3$ zerlegt ist) vier Textur-Kanten-Teilhistogramme mit jeweils 9 Werten $thist_k(1)$, wobei k einen Index des betreffenden Rechtecks und 1 den Index eines Wertes angibt. In anderen Worten, für jede Gruppe existiert eine Darstellung eines Histogramms, die eine Auftretens-Häufigkeit von Kantentypen unter den Block-Kantentypen der zu der Gruppe gehörigen Blöcke beschreibt. Somit sind jeder Gruppe von Blöcken beziehungsweise jedem "Rechteck" so viele Werte zugeordnet, wie verschiedene Kantentypen existieren. Allerdings kann auch eine andere Form der Darstellung gewählt werden, durch die die entsprechenden Auftretens-Häufigkeiten beschrieben werden.

Ein neunter Schritt 1054 umfasst ein Zusammenfassen von Gruppen-Histogrammen 1052, die für mehrere Gruppen von Blöcken gebildet wurden, zu einen gemeinsamen Histogramm 1056. In anderen Worten, in einem weiteren beziehungsweise letzten Verfahrensschritt wird aus allen Textur-Kanten-Teilhistogrammen (also aus Gruppen-Histogrammen für mehrere Gruppen von Blöcken) durch Aneinanderreihen ein Textur-Kanten-Histogramm für das gesamte Bild erzeugt.

Das entsprechende Histogramm wird mit hist bezeichnet, und für die einzelnen Elemente beziehungsweise Werte hist(r) gilt:

$$hist(k * 9 + l) = thist_k(l) \text{ mit } 0 \leq k < 4 \text{ und } 0 \leq l < 9.$$

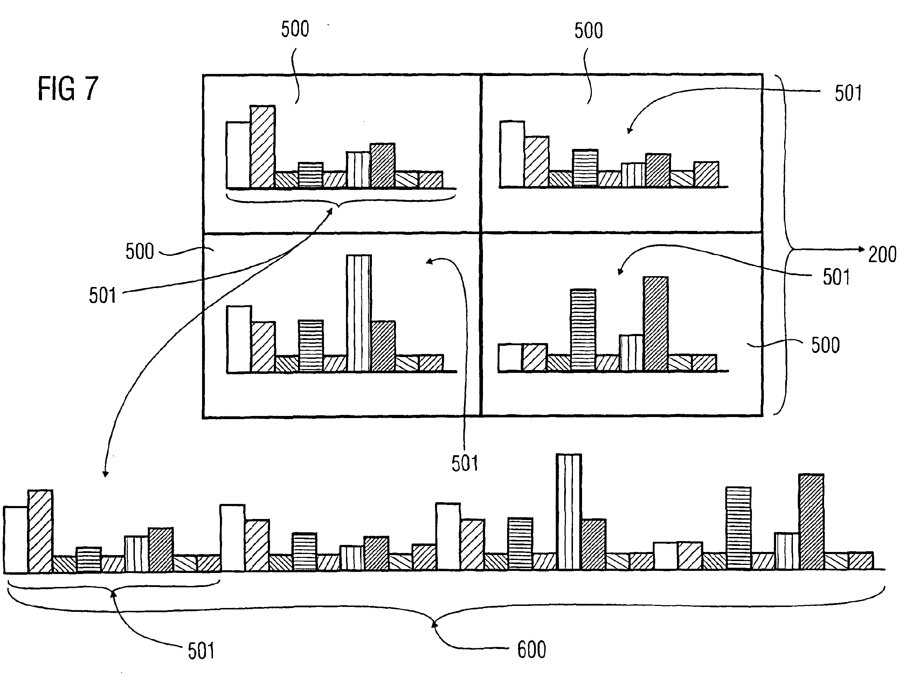

Die obige Gleichung zur Bestimmung der Elemente des Histogramms hist gilt beispielsweise für den Fall, dass vier Rechtecke (bezeichnet durch den Index k) und neun Kantentypen (bezeichnet durch den Index 1) existieren. Das Zusammenfügen der Textur-Kanten-Teilhistogramme (beziehungsweise Gruppen-Histogramme) zu einem Textur-Kanten-Histogramm für das gesamte Bild (gemeinsames Histogramm) ist anhand der Fig. 7 veranschaulicht. Fig. 7 zeigt ein Bild 200, das in vier Rechtecke 500 zerlegt ist. Für jedes Rechteck existiert ein zugehöriges Textur-Kanten-Teilhistogramm 501. Durch Zusammenfügen der beispielsweise vier jeweiligen Textur-Kanten-Teilhistogramme 501 entsteht somit ein Textur-Kanten-Histogramm 600 für das gesamte Bild 200.

Zusammenfassend ist somit festzuhalten, dass ein Ausführungsbeispiel der Erfindung ein Verfahren zur Generierung eines Textur-Kanten-Histogramms von digitalen Bildern unter Verwendung von Intensitätswerten der einzelnen Bildelemente (Pixel) betrifft. Ein Ausführungsbeispiel des erfindungsgemäßen Verfahrens umfasst beispielsweise die folgenden Verfahrensschritte:

a) Berechnung eines horizontalen und vertikalen Gradienten in Bezug auf Intensitätswerte für jedes Pixel in dem Bild.

b) Berechnung der Gradientenstärke und des Gradientenwinkels für jedes Pixel in dem Bild aus dem horizontalen und vertikalen Gradienten.

c) Zerlegung des zweidimensionalen Gradientenstärke/Gradientenwinkel-Wertebereichs in disjunkte und wertebereichsüberdeckende Teilbereiche, derart, dass jedem Pixel in dem Bild durch die ihm zugeordnete Gradientenstärke und durch den ihm zugeordneten Gradientenwinkel genau ein Teilbereich zugeordnet werden kann. Die Teilbereiche werden beispielsweise so bestimmt, dass sie verschiedene Textur-Kantentypen (einfarbige Fläche; Textur; Kante) repräsentieren.

d) Vorgabe eines zweidimensionalen Gitternetzes von Gitterpunkten sowie Bildung von Blöcken um die Gitterpunkte.

e) Berechnung von gewichteten Textur-Kantentyphäufigkeiten für jeden Block, dadurch, dass eine gewichtete Anzahl der Pixel des Blocks in Bezug auf den jeweiligen Textur-Kantentyp bestimmt wird.

f) Bestimmung eines repräsentativen Textur-Kantentyps für jeden Block, dadurch, dass der Textur-Kantentyp bestimmt wird, der die höchste Häufigkeit in dem Block hat.

g) Zerlegung des Bildes in Rechtecke, derart, dass das Bild überdeckt wird.

h) Generierung von Textur-Kanten-Teilhistogrammen für jedes Rechteck des Bildes durch Bestimmung der Häufigkeit des Textur-Kantentypes der Blöcke, dessen Gitterpunkte in den Rechtecken enthalten sind.

i) Generierung eines Textur-Kanten-Histogramms des gesamten Bildes durch Aneinanderreihen aller Textur-Kanten-Teilhistogramme.

Diesbezüglich sei darauf hingewiesen, dass die Schritte d) und f) bis i) benutzt werden, um die Ergebnisse der Schritte c) und e) auszuwerten.

Das oben beschriebene Konzept kann ganz wesentlich modifiziert werden, wie im Folgenden ausgeführt wird. Zunächst sei darauf hingewiesen, dass die Art und Weise, wie die Information über Gradientenstärke und Gradientenrichtung berechnet wird, beliebig gewählt werden kann. In anderen Worten, anstelle der Schritte 1032 bis 1038 kann ein beliebiges Verfahren treten, das geeignet ist, um eine Information über Gradientenstärke und Gradientenrichtung zu bestimmen. Bei einem Ausführungsbeispiel der vorliegenden Erfindung wird ein besonderer Vorteil dadurch erzielt, dass die Information über die Gradientenstärke und Gradientenrichtung in einem Schritt 1040 so auf einen lokalen Kantentyp 1020 für einen Bildteil abgebildet wird, dass anhand des lokalen Kantentyps zumindest drei verschiedene Gradientenstärken unterschieden werden können. In anderen Worten, bei dem Ausführungsbeispiel der vorliegenden Erfindung kommt es nur darauf an, dass eine Zuordnungsvorschrift für die Abbildung der Information über die Gradientenstärke und die Gradientenrichtung zu dem lokalen Kantentyp verwendet wird, gemäß der drei verschiedenen Gradientenstärken drei verschiedene lokale Kantentypen zugeordnet werden. Wird basierend auf der genannten Information 1020 über einen lokalen Kantentyp, somit ein Kantentyp-Histogramm gebildet, so entsteht ein Kantentyp-Histogramm, das eine Aussage darüber umfasst, ob in dem Bild eine im Wesentlichen einfarbige Fläche, eine Textur oder eine deutlich sichtbare Kante vorliegt beziehungsweise in welchem Verhältnis die genannten Strukturen in dem Bild auftreten. Allerdings ist es bei dem genannten Ausführungsbeispiel unerheblich, wie genau die Bildung des Histogramms erfolgt. In anderen Worten, bei dem genannten Ausführungsbeispiel kommt es nicht darauf an, wie genau die Weiterverarbeitung der Information 1020 über den lokalen Kantentyp erfolgt. Daher können bei dem genannten Ausführungsbeispiel die Schritte 1042, 1048, 1050, 1054 durch eine beliebige Erzeugung eines Histogramms basierend auf der Information 1020 über den lokalen Kantentyp ersetzt werden.

Gemäß einem weiteren Aspekt der vorliegenden Erfindung kann bei einem weiteren Ausführungsbeispiel der vorliegenden Erfindung die Art und Weise, wie die Information 1020 über einen lokalen Kantentyp erzeugt wird, wesentlich verändert sein. So ist bei dem genannten Ausführungsbeispiel lediglich von Bedeutung, dass verschiedene lokale Kantentypen unterschieden werden können. Auf die Art und Weise, wie die Information über Gradientenstärke und Gradientenrichtung berechnet wird, sowie auf die Art und Weise, wie der lokale Kantentyp aus der Information über Gradientenstärke und Gradientenrichtung ermittelt wird, kommt es hingegen bei diesem Ausführungsbeispiel nicht an. Im Übrigen ist es bei dem genannten Ausführungsbeispiel auch nicht von Bedeutung, ob überhaupt eine Information über Gradientenstärke und Gradientenrichtung ermittelt wird. Vielmehr könnte die Information über den lokalen Kantentyp 1020 auch auf einem anderen Wege aus dem Bild 1010 gewonnen werden. Ein besonders gut verwendbares Kantentyp-Histogramm entsteht bei dem genannten Ausführungsbeispiel durch die Berechnung der gewichteten Kantentyp-Häufigkeitsinformation 1046 in dem Schritt 1042. Das genannte Ausführungsbeispiel profitiert dabei im Wesentlichen von der Gewichtung. Die gewichtete Kantentyp-Häufigkeitsinformation, die gemäß dem Schritt 1042 erhalten wird, kann allerdings auch auf anderem Wege als oben beschrieben, verwendet werden, um ein Kanten-Histogramm zu erzeugen. In anderen Worten, bei dem genannten Ausführungsbeispiel können die Schritte 1048, 1050 und 1054 auch durch einen oder mehrere andere Schritte ersetzt werden. Im Übrigen kann die gewichtete Kantentyp-Häufigkeitsinformation 1046 auch unmittelbar als das Kantentyp-Histogramm verwendet werden.

Gemäß einem weiteren Aspekt der vorliegenden Erfindung existiert ein weiteres Ausführungsbeispiel, bei dem eine deutliche Verbesserung der Qualität eines Kantentyp-Histogramms dadurch erzielt wird, dass für einen Block von Bildteilen gemäß dem Schritt 1048 ein Block-Kantentyp berechnet wird, und dass ferner ein Histogramm basierend auf den Block-Kantentypen für mehrere Blöcke bestimmt wird. Durch die genannte Vorgehensweise entsteht ein übergeordnetes Histogramm über die Block-Kantentypen von mehreren Blöcken, wobei für jeden Block nur ein "dominanter" Kantentyp verwendet wird. Bei dem Verfahren gemäß dem entsprechenden Ausführungsbeispiel wird die Verbesserung des Kanten-Histogramms somit durch ein Weglassen von Informationen, die nicht dominant sind, also beispielsweise der Information über die anderen Kantentypen, die nicht als Block-Kantentyp ausgewählt wurden, erreicht. Daher kommt es bei dem genannten Ausführungsbeispiel nicht darauf an, wie die Kantentyp-Häufigkeitsinformationen für die Blöcke von Bildteilen berechnet werden. So kommt es beispielsweise bei dem genannten Ausführungsbeispiel auch nicht darauf an, ob bei dem Bestimmen 1048 des Blockkantentyps eine gewichtete Kantentyp-Häufigkeitsinformation für die Blöcke oder eine ungewichtete Kantentyp-Häufigkeitsinformation für die Blöcke verwendet wird. Im Übrigen ist es bei dem genannten Ausführungsbeispiel auch nicht von Relevanz, auf welche Weise die Informationen über die Kantentypen gewonnen werden. Bei dem genannten Ausführungsbeispiel können daher die Schritte 1032, 1034, 1036, 1038, 1040, 1042 auch beliebig verändert oder ganz weggelassen werden, solange gewährleistet ist, dass basierend auf einer KantentyphäufigkeitsInformation für einen Block von Bildteilen ein Block-Kantentyp ausgewählt wird. Bei dem genannten Ausführungsbeispiel wird dann, basierend auf den Block-Kantentypen für eine Mehrzahl von Blöcken ein weiteres Histogramm gebildet, wie dies beispielsweise anhand des Schrittes 1050 beschrieben wurde. Es ist allerdings nicht von wesentlicher Bedeutung, wie das entsprechende Gruppen-Histogramm 1052 weiterverarbeitet wird.

Zusammenfassend ist somit festzuhalten, dass es bei dem ersten Ausführungsbeispiel lediglich darauf ankommt, wie ein lokaler Kantentyp basierend auf einer Information über eine Gradientenstärke und eine Gradientenrichtung unter Verwendung einer Zuordnungsvorschrift erhalten werden kann. Auf Details im Hinblick darauf, wie die Informationen über Gradienstärke und Gradientenrichtung erzeugt werden, und auf Details, wie ein Histogramm basierend auf den lokalen Kantentypen erzeugt wird, kommt es hingegen bei diesem Ausführungsbeispiel nicht an.

Bei einem zweiten Ausführungsbeispiel kommt es darauf an, eine gewichtete Kantentyp-Häufigkeitsinformation basierend auf einer Information über lokale Kantentypen zu erzeugen. Bei diesem zweiten Ausführungsbeispiel kommt es nicht darauf an, wie die Information über lokale Kantentypen gewonnen wird. Außerdem kommt es nicht darauf an, wie genau aus der gewichteten Kantentyp-Häufigkeitsinformation ein Kantentyp-Histogramm gewonnen wird.

Bei einem dritten Ausführungsbeispiel kommt es ferner darauf an, dass ein Histogramm über Block-Kantentypen gebildet wird. Wie die für die Bestimmung der Block-Kantentypen benötigte Kantentyp-Häufigkeitsinformation gewonnen wird, ist dagegen für die grundsätzliche Funktionsweise des dritten Ausführungsbeispiels unerheblich. Ebenso ist es unerheblich, ob und ggf. wie das Gruppen-Histogramm weiter verarbeitet wird.

Im Folgenden wird noch beispielhaft beschrieben, wie die erfindungsgemäß berechneten Kanten-Histogramme weiterverarbeitet werden können. Die im Folgenden beschriebenen Beispiele stellen allerdings keine abschließende Darstellungen von möglichen Anwendungsfällen dar, sondern sind lediglich als exemplarisch zu betrachten.

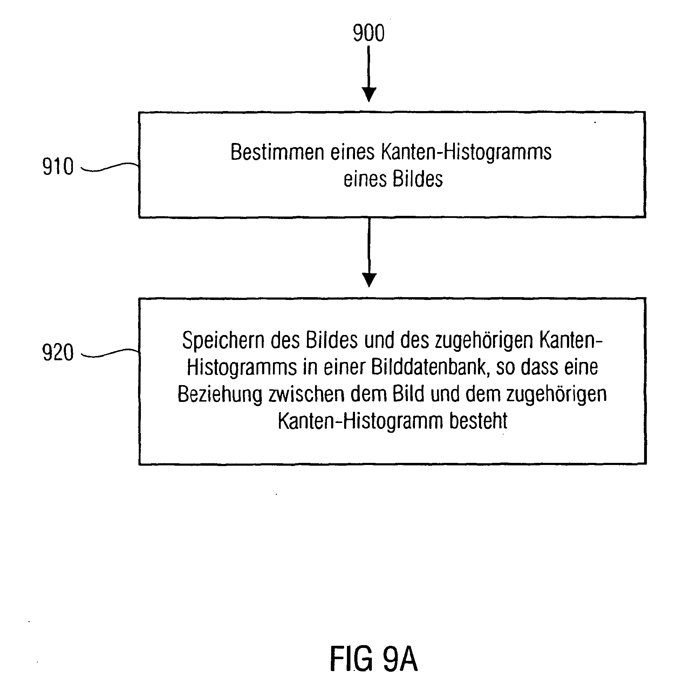

Fig. 9A ein Flussdiagramm eines Verfahrens zum Ablegen eines Bildes in einer Bilddatenbank. Das Verfahren gemäß der Fig. 9A in seiner Gesamtheit mit 900 bezeichnet. Das Verfahren 900 umfasst in einem ersten Schritt 910 ein Bestimmen eines Kanten-Histogramms eines Bildes, wie dies im Rahmen der vorliegenden Beschreibung ausführlich erläutert wurde. Das Verfahren umfasst ferner in einem zweiten Schritt 920 ein Speichern des Bildes und des zugehörigen Kanten-Histogramms in einer Bilddatenbank, so dass eine Beziehung zwischen dem Bild und dem zugehörigen Kanten-Histogramm besteht. So kann beispielsweise das Kanten-Histogramm (in komprimierter oder unkomprimierter Form) direkt an das Bild angehängt oder in das Bild eingebettet werden. Beispielsweise kann so das Kanten-Histogramm in einer gemeinsamen Datei mit dem Bild zusammen gespeichert sein. Alternativ dazu kann ein Querverweis angelegt werden, so dass von dem in der Datenbank abgelegten Bild auf das in der Datenbank abgelegte Kanten-Histogramm verwiesen wird oder umgekehrt. Somit entsteht durch das Verfahren 900 eine Bilddatenbank, die zusätzlich zu dem Bild das zu dem Bild gehörige Kanten-Histogramm umfasst. Damit wird es möglich, unter Verwendung der Bilddatenbank ein Bild besonders zuverlässig zu identifizieren. Dies liegt daran, dass das erfindungsgemäß erzeugte Kanten-Histogramm aufgrund der oben beschriebenen Art der Erzeugung besonders zuverlässig ist.

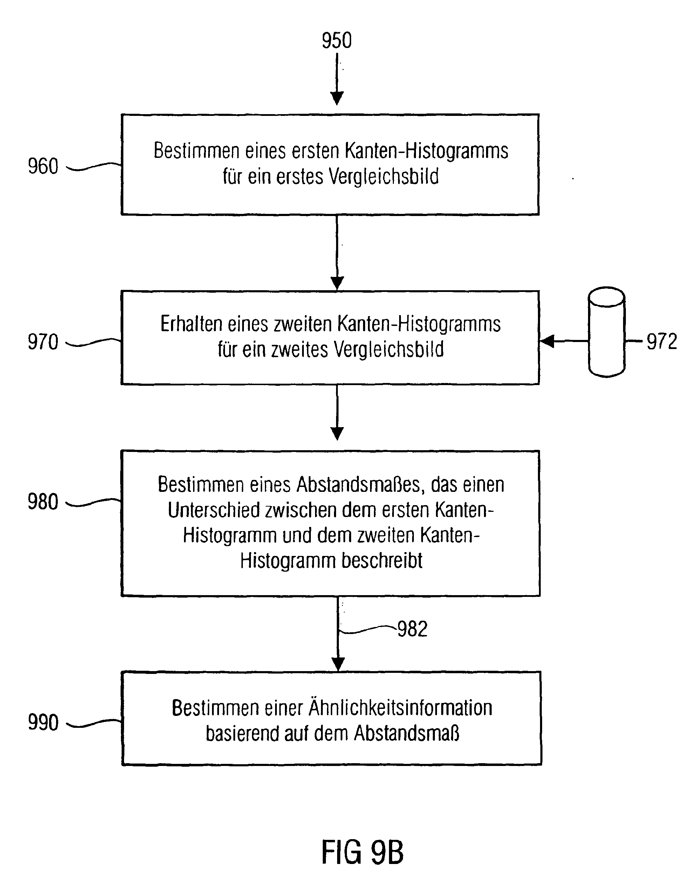

Fig. 9B zeigt ein Flussdiagramms eines Verfahrens zum Auffinden von zwei ähnlichen Bildern, gemäß einem Ausführungsbeispiel der vorliegenden Erfindung. Das Verfahren gemäß der Fig. 9B ist in seiner Gesamtheit mit 950 bezeichnet. Das Verfahren 950 kann beispielsweise eingesetzt werden, um eine Ähnlichkeitsinformation im Hinblick auf zwei gegebene Bilder zu bestimmen. Außerdem kann das Verfahren 950 eingesetzt werden, um basierend auf einem vorgegeben Beispielbild ein Bild in einer Bilddatenbank zu identifizieren. Das Verfahren 950 umfasst in einem ersten Schritt 960 ein Bestimmen eines ersten Kanten-Histogramms für ein erstes Vergleichsbild. Das Bestimmen des ersten Kanten-Histogramms kann beispielsweise in der oben beschriebenen Weise erfolgen.

Das Verfahren 950 umfasst in einem zweiten Schritt 970 ein Erhalten eines zweiten Kanten-Histogramms für ein zweites Vergleichsbild. Das zweite Kanten-Histogramm für das zweite Vergleichsbild kann beispielsweise entsprechend dem oben beschriebenen Verfahren erhalten werden. Allerdings kann das zweite Kanten-Histogramm beispielsweise auch aus einer Datenbank 972 ausgelesen werden, in die es beispielsweise vorher abgelegt worden ist. Das Ablegen des zweiten Kanten-Histogramms in der Datenbank ist allerdings nicht notwendigerweise ein Teil des Verfahrens 950.

Das Verfahren 950 umfasst ferner in einem dritten Schritt 980 ein Bestimmen eines Abstandsmaßes, das einen Unterschied zwischen dem ersten Kanten-Histogramm und dem zweiten Kanten-Histogramm beschreibt. Somit kann ein Abstandsmaß 982 erhalten werden. Das Abstandsmaß 982 ist somit ein Maß für einen Unterschied zwischen zwei Bildern. Liegen beispielsweise für das erste Vergleichsbild und das zweite Vergleichsbild entsprechende Textur-Kanten-Histogramme vor (beispielsweise ein erstes Textur-Kanten-Histogramm für das gesamte erste Bild und ein zweites Textur-Kanten-Histogramm für das gesamte zweite Bild, wie dies beispielsweise durch hist definiert ist), so können bei einer Abstandsberechnung zweier Bilder in Bezug auf das Textur-Kanten-Histogramm die beiden Histogramme wie Vektoren behandelt werden. Als Abstandsmaß kommen beispielsweise übliche für Vektoren geltende Abstandsmaße, wie z. B. ein euklidischer Abstand in Frage. In anderen Worten, ein Kanten-Histogramm für das erste Bild kann als ein erster Vektor aufgefasst werden und ein Kanten-Histogramm für das zweite Bild kann als ein zweiter Vektor aufgefasst werden. Ein Abstandsmaß, das den Unterschied zwischen den beiden Bildern beschreibt, kann beispielsweise durch Bestimmung eines Abstands zwischen den genannten Vektoren berechnet werden. Verschiedene Abstandsmaße, die Abstände zwischen zwei Vektoren beschreiben, sind dabei aus dem Bereich der Mathematik bekannt. Basierend auf dem Abstandsmaß 982 kann ferner in einem (optionalen) vierten Schritt 990 eine Ähnlichkeitsinformation bestimmt werden, die eine Aussage über eine Ähnlichkeit zwischen dem ersten Vergleichsbild und dem zweiten Vergleichsbild trägt. Basierend auf dem Abstandsmaß und/oder auf der Ähnlichkeitsinformation kann im Übrigen (beispielsweise unter Verwendung eines Schwellwerts) entschieden werden, ob das erste Vergleichsbild und das zweite Vergleichsbild ausreichend ähnlich sind. Basierend auf dieser Information kann beispielsweise ferner entschieden werden, ob das beispielsweise in einer Datenbank abgelegte zweite Vergleichsbild an einen Benutzer ausgegeben werden soll.

Im Hinblick auf das oben beschriebene Verfahren ist festzuhalten, dass das Verfahren als Ganzes oder in einzelnen Teilschritten ausgeführt werden kann. Die einzelnen Teilschritte des Verfahrens können im Übrigen auch an verschiedenen Orten (zum Beispiel auf verschiedenen miteinander vernetzten Computern) ausgeführt werden.

Die oben beschriebenen Verfahren können ferner auch durch entsprechende Vorrichtungen realisiert werden. Beispielsweise können die oben beschriebenen Verfahren durch eine entsprechende Schaltungsanordnung realisiert werden. Daneben kann beispielsweise eine Logikschaltung (zum Beispiel ein feldprogrammierbares Gatterfeld, auch als FPGA bekannt) verwendet werden, um die oben beschriebenen Verfahren zu realisieren. Die erfindungsgemäßen Verfahren können somit auch durch entsprechende Programmierdaten für ein FPGA dargestellt werden. Ferner kann das erfindungsgemäße Verfahren beispielsweise durch einen Computer realisiert werden, der Instruktionen umfasst, die die Ausführung des beschriebenen Verfahrens definieren. Die oben beschriebenen Verfahren können ferner in Software realisiert sein.

In anderen Worten, die erfindungsgemäßen Vorrichtungen und die erfindungsgemäßen Verfahren können in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird. Allgemein besteht die vorliegende Erfindung somit auch in einem Computer-Programm-Produkt mit auf einem maschinenlesbaren Träger gespeicherten Programmcode zur Durchführung des erfindungsgemäßen Verfahrens, wenn das Computerprogramm-Produkt auf einem Rechner abläuft. In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Zusammenfassend ist festzuhalten, dass erkannt wurde, dass eine Beschreibung von Bildern besonders präzise erfolgen kann, wenn Merkmale, die sowohl Kanten als auch Texturen beschreiben, in Kombination verwendet werden. Einige Ausführungsbeispiele der vorliegenden Erfindung lösen somit die Aufgabe, beide Aspekte (Kanten und Texturen) in Bildern gemeinsam zu berücksichtigen, um auf diese Weise beispielsweise bei einer Suche nach ähnlichen Bildern in Datenbanken zu besseren Ergebnissen, über alle möglichen Bildmotive hinweg, zu kommen.

Zusammenfassend ist ferner festzustellen, dass Ausführungsbeispiele der vorliegenden Erfindung zu signifikant besseren Suchergebnissen bei einer ähnlichkeitsbasierten Bildsuche führen. Diese Verbesserung kommt unter anderem dadurch zustande, dass die Häufigkeit der in den einzelnen Bildbereichen auftretenden Kanten und Texturen gemeinsam betrachtet wird. Bisherige Systeme betrachten hingegen in vielen Fällen Kanten und Texturen getrennt. Durch das beschriebene Konzept, Kanten und Texturen gemeinsam zu betrachten, werden bei einigen Ausführungsbeispielen der vorliegenden Erfindung Überlagerungen vermieden, die herkömmlicherweise Suchergebnisse zum Beispiel bei Bildern, die Flächen mit Texturen enthalten (z.B. Wasserflächen, Baumkronen, Wolken) verschlechtern.

Ein Ausführungsbeispiel der Erfindung schafft eine Vorrichtung zum Bestimmen eines Kanten-Histogramms 1046; 1052; 1056 eines Bildes 1010 basierend auf einer Information über eine Gradientenstärke und eine Gradientenrichtung eines lokalen Gradienten in einem Bildinhalt eines Teilbildes des Bildes, mit folgenden Merkmalen: einem Zuordner, der ausgelegt ist, um die Information über die Gradientenstärke und die Gradientenrichtung basierend auf einer Zuordnungsvorschrift zu einem Kantentyp zuzuordnen, um eine Kantentyp-Information 1020 zu erhalten, wobei die Zuordnungsvorschrift so gewählt ist, dass bei einer vorgegebenen Gradientenrichtung zumindest drei verschiedene zugeordnete Kantentypen existieren, die verschiedene Gradientenstärken widerspiegeln; und einen Kanten-Histogramm-Bestimmer, der ausgelegt ist, um das Kanten-Histogramm basierend auf der Kantentyp-Information zu bestimmen, so dass in dem Kantentyp-Histogramm zumindest drei Kantentypen mit verschiedenen zugeordneten Gradientenstärken unterscheidbar sind, wobei der Zuordner so ausgelegt ist, dass eine Richtungsauflösung der Zuordnung in Bezug auf die Gradientenrichtung abhängig von der Gradientenstärke ist.

Ein Ausführungsbeispiel der Erfindung schafft eine oben erwähnte Vorrichtung, die ferner einen Gradientenbestimmer aufweist, der ausgelegt ist, um das Bild unter Verwendung eines ersten Filteroperators zu filtern, um eine erste Gradienteninformation im Hinblick auf eine erste Richtung in dem Bild zu erhalten, der ausgelegt ist, um das Bild unter Verwendung eines zweiten Filteroperators zu filtern, um eine Gradienteninformation im Hinblick auf eine zweite Richtung in dem Bild zu erhalten, und der ferner ausgelegt ist, um die Information über die Gradientenstärke und die Gradientenrichtung basierend auf der ersten Gradienteninformation und der zweiten Gradienteninformation zu erhalten.

Ein Ausführungsbeispiel der Erfindung schafft eine oben erwähnte Vorrichtung, wobei der Gradientenbestimmer ausgelegt ist, um die Information über die Gradientenstärke unter Verwendung eines lokalen Norm-Operators aus der ersten Gradienteninformation und der zweiten Gradienteninformation abzuleiten.

Ein Ausführungsbeispiel der Erfindung schafft eine oben erwähnte Vorrichtung, wobei der Gradientenbestimmer ausgelegt ist, um die erste Gradienteninformation und die zweite Gradienteninformation so zu erhalten, dass die erste Richtung im Wesentlichen orthogonal zu der zweiten Richtung ist, und wobei der Gradientenbestimmer ferner ausgelegt ist, um die Information über die Gradientenrichtung unter Verwendung einer trigonometrischen Funktion aus der ersten Gradienteninformation und der zweiten Gradienteninformation abzuleiten.

Ein Ausführungsbeispiel der Erfindung schafft eine oben erwähnte Vorrichtung, wobei der Zuordner ausgelegt ist, um die Gradientenrichtung in Form eines Gradientenwinkels zu verarbeiten.

Ein Ausführungsbeispiel der Erfindung schafft eine oben erwähnte Vorrichtung, wobei die Vorrichtung ausgelegt ist, um eine Information über Gradientenstärken und Gradientenrichtungen für eine Mehrzahl von benachbarten Bildteilen des Bildes zu erhalten und eine zugeordnete Information über lokale Kantentypen für eine Mehrzahl von benachbarten Bildteilen des Bildes zu erhalten, wobei der Kanten-Histogramm-Bestimmer ausgelegt ist, um ein Histogramm, das eine Kantentyp-Häufigkeits-Information für mehrere Bildteile, die zu einem ersten Block von Bildteilen gehören, zusammenfasst, zu bestimmen, und um einen Kantentyp, dem in dem Histogramm ein maximaler Häufigkeitswert zugeordnet ist, als Block-Kantentyp für den ersten Block zu bestimmen; wobei der Kanten-Histogramm-Bestimmer ferner ausgelegt ist, um ein jeweiliges Histogramm und einen jeweiligen Block-Kantentyp für eine Mehrzahl von weitern Blöcken zu bestimmen; und wobei der Kanten-Histogramm-Bestimmer ferner ausgelegt ist, um ein Histogramm, das eine Häufigkeit von verschiedenen Kantentypen unter den Block-Kantentypen für die verschiedenen Blöcke beschreibt, zu bestimmen, um das Kanten-Histogramm für das Bild zu erhalten.

Ein Ausführungsbeispiel der Erfindung schafft eine oben erwähnte Vorrichtung, wobei der Kanten-Histogramm-Bestimmer ausgelegt ist, um eine erste Mehrzahl von Blöcken zu einer ersten Gruppe von Blöcken zusammenzufassen, und um eine zweite Mehrzahl von Blöcken, die sich von der ersten Mehrzahl von Blöcken zumindest in einem Block unterscheidet, zu einer zweiten Gruppe von Blöcken zusammenzufassen; wobei der Kanten-Histogramm-Bestimmer ausgelegt ist, um ein erstes Gruppen-Histogramm, das eine Häufigkeit von verschiedenen Kantentypen unter den Block-Kantentypen für die Blöcke der ersten Gruppe von Blöcken beschreibt, zu erhalten, und um ein zweites Gruppen-Histogramm, das eine Häufigkeit von verschiedenen Kantentypen unter den Block-Kantentypen für die Blöcke der zweiten Gruppe von Blöcken beschreibt, zu erhalten; und wobei der Kanten-Histogramm-Bestimmer ausgelegt ist, um das erste Gruppen-Histogramm und das zweite Gruppen-Histogramm zu einem Gesamt-Histogramm zusammenzufassen.

Ein Ausführungsbeispiel der Erfindung schafft eine oben erwähnte Vorrichtung, wobei der Kanten-Histogramm-Bestimmer ausgelegt ist, um das Bild in eine Mehrzahl von Gruppen von Blöcken aufzuteilen, wobei jeder Block eine Mehrzahl von Bildteilen umfasst, um für jede der Gruppen von Blöcken ein zugehöriges Gruppen-Histogramm zu erhalten; und wobei der Kanten-Histogramm-Bestimmer ausgelegt ist, um die Gruppen-Histogramme durch Aneinanderreihen der Gruppen-Histogramme zu einem Gesamt-Histogramm zusammenzufassen.

Ein Ausführungsbeispiel der Erfindung schafft eine oben erwähnte Vorrichtung, wobei der Kanten-Histogramm-Bestimmer ausgelegt ist, um zusätzlich zu den Gruppen von Blöcken, in die das Bild aufgeteilt ist, eine weitere Gruppe von Blöcken auszuwählen, die eine Bildmitte umfasst, um einen Einfluss der Bildmitte auf das Gesamt-Histogramm zu erhöhen.

Ein Ausführungsbeispiel der Erfindung schafft eine oben erwähnte Vorrichtung, wobei eine Gruppe von Blöcken einen rechteckigen Bildbereich definiert.

Ein Ausführungsbeispiel der Erfindung schafft eine oben erwähnte Vorrichtung, wobei alle Gruppen von Blöcken gleich große Bildbereiche definieren.

Ein Ausführungsbeispiel der Erfindung schafft eine oben erwähnte Vorrichtung, wobei der Kanten-Histogramm-Bestimmer ausgelegt ist, um bei der Bestimmung des Block-Kanten-Typs Kantentypen, denen gleiche Häufigkeitswerte und verschiedene Richtungen zugeordnet sind, in einer vorgegebenen Reihenfolge zu berücksichtigen.

Bezugszeichenliste

100 Gradientenstärke $G(j,i)$
101 Gradientenwinkel $\alpha(j,l)$
102 unterer Schwellwert $t_u$
103 oberer Schwellwert $t_o$
104 Textur-Kantentyp bzw. Teilbereich $B_k$
200 Digitales Bild
201 Pixel
300 Gitterpunkt $GP(j_G, i_G)$
301 Versatz in horizontaler Richtung $offset_x$
302 Versatz in vertikaler Richtung $offset_y$
303 Schrittweite in horizontaler *Richtung $d_x$*
304 Schrittweite in vertikaler *Richtung $d_y$*
305 Block *$Block(j_G, i_G)$*
400 Gewichtung
401 Gewichtete Häufigkeit
402 Repräsentativer Textur-Kantentyp
500 Bildrechteck $R_k$
501 Textur-Kanten-Teilhistogramm $thist_k(l)$
600 Textur-Kanten-Histogramm $hist(k \cdot 9 + l)$

**Patentansprüche**

1. Vorrichtung zum Bestimmen eines Kanten-Histogramms (1046; 1052; 1056) eines Bildes (1010) basierend auf einer Information über eine Gradientenstärke und eine Gradientenrichtung eines lokalen Gradienten in einem Bildinhalt eines Teilbildes des Bildes, mit folgenden Merkmalen:

   einem Zuordner, der ausgelegt ist, um die Information über die Gradientenstärke und die Gradientenrichtung basierend auf einer Zuordnungsvorschrift zu einem Kantentyp zuzuordnen, um eine Kantentyp-Information (1020) zu erhalten,
   wobei die Zuordnungsvorschrift so gewählt ist, dass bei einer vorgegebenen Gradientenrichtung zumindest drei verschiedene zugeordnete Kantentypen existieren, die verschiedene Gradientenstärken widerspiegeln; und
   einen Kanten-Histogramm-Bestimmer, der ausgelegt ist, um das Kanten-Histogramm basierend auf der Kantentyp-Information zu bestimmen, so dass in dem Kantentyp-Histogramm zumindest drei Kantentypen mit verschiedenen zugeordneten Gradientenstärken unterscheidbar sind,
   wobei der Zuordner so ausgelegt ist, dass eine Richtungsauflösung der Zuordnung in Bezug auf die Gradientenrichtung abhängig von der Gradientenstärke ist.

2. Vorrichtung gemäß Anspruch 1, wobei der Zuordner ausgelegt ist, und zumindest drei Intervalle von Gradientenstärken bei der Zuordnung zu Kantentypen zu unterscheiden.

3. Vorrichtung gemäß einem der Ansprüche 1 und 2, wobei der Zuordner ausgelegt ist, um die Information über die Gradientenstärke und die Gradientenrichtung winkelunabhängig einem ersten Kantentypen ($B_0$) zuzuordnen, wenn die Gradientenstärke einen vorgegebenen ersten Gradientenstärken-Schwellwert ($t_u$) nicht überschreitet, und um die Information über die Gradientenstärke und die Gradientenrichtung winkelabhängig verschiedenen Kantentypen ($B_5$, $B_6$, $B_7$, $B_8$) zuzuordnen, wenn die Gradientenstärke einen vorgegebenen zweiten Gradientenstärken-Schwellwert ($t_o$) überschreitet.

4. Vorrichtung gemäß einem der vorhergehenden Ansprüche, wobei der Zuordner so ausgelegt ist, dass die Richtungsauflösung der Zuordnung in Bezug auf die Gradientenrichtung mit steigender Gradientenstärke in zumindest zwei Schritten ansteigt, so dass die Richtungsauflösung abhängig von der Gradientenstärke zumindest drei verschiedene Stufen annimmt.

5. Vorrichtung gemäß einem der Ansprüche 1 bis 4, wobei der Zuordner ausgelegt ist, um bei einer geringen Gradientenstärke, die kleiner als ein erster Gradientenstärken-Schwellwert ($t_u$) ist, der Information über die Gradientenstärke und die Gradientenrichtung winkelunabhängig einen ersten Kantentyp ($B_0$) zuzuordnen, um bei einer mittleren Gradientenstärke, die größer als der erste Gradientenstärke-Schwellwert ($t_u$) und kleiner als ein zweiter Gradientenstärke-Schwellwert ($t_o$) ist, der Information über die Gradientenstärke und die Gradientenrichtung in Abhängigkeit von der Gradientenrichtung einen Kantentyp aus einem ersten Satz von vier Kantentypen ($B_1$,$B_2$,$B_3$,$B_4$) zuzuordnen, und um bei einer hohen Gradientenstärke, die größer als die zweite Gradientenstärke-Schwellwert ($t_o$) ist, der Information über die Gradientenstärke und die Gradientenrichtung in Abhängigkeit von der Gradientenrichtung einen Kantentyp aus einem zweiten Satz von Kantentypen ($B_5$, $B_6$, $B_7$, $B_8$) zuzuordnen.

6. Vorrichtung gemäß Anspruch 5, wobei der Zuordner ausgelegt ist, um insgesamt neun Kantentypen zu unterscheiden, wobei der zweite Satz von Kantentypen vier verschiedene Kantentypen umfasst.

7. Vorrichtung gemäß einem der Ansprüche 1 bis 6, wobei der Kanten-Histogramm-Bestimmer einen gewichtenden Kanten-Histogramm-Bestimmer umfasst, der ausgelegt ist, um eine gewichtete Kantentyp-Häufigkeitsinformation, die eine Auftretens-Häufigkeit von verschiedenen lokalen Kantentypen beschreibt, zu einem Bildausschnitt, der eine Mehrzahl von Bildteilen umfasst, zu bestimmen, um das Kanten-Histogramm zu erhalten; wobei der gewichtende Kanten-Histogramm-Bestimmer ausgelegt ist, um bei der Bestimmung der gewichteten Kantentyp-Häufigkeits-Information das Auftreten lokaler Kantentypen in Bildteilen, die zu einer sich über mehrere Bildteile erstreckenden ausgedehnten Kante gehören, höher zu gewichten, als das Auftreten von lokalen Kantentypen, die zu isolierten lokalen Kanten gehören.

8. Vorrichtung gemäß einem der Ansprüche 1 bis 7, wobei die Vorrichtung ausgelegt ist, um eine Information über Gradientenstärken und Gradientenrichtungen für eine Mehrzahl von benachbarten Bildteilen des Bildes zu erhalten und eine zugeordnete Information über lokale Käntentypen für eine Mehrzahl von benachbarten Bildteilen des Bildes zu erhalten, wobei der Kanten-Histogramm-Bestimmer ausgelegt ist, um ein Histogramm, das eine Kantentyp-Häufigkeits-Information für mehrere Bildteile, die zu einem ersten Block von Bildteilen gehören, zusammenfasst, zu bestimmen, und um einen Kantentyp, dem in dem Histogramm ein maximaler Häufigkeitswert zugeordnet ist, als Block-Kantentyp für den ersten Block zu bestimmen; wobei der Kanten-Histogramm-Bestimmer ferner ausgelegt ist, um ein jeweiliges Histogramm und einen jeweiligen Block-Kantentyp für eine Mehrzahl von weiter Blöcken zu bestimmen; und wobei der Kanten-Histogramm-Bestimmer ferner ausgelegt ist, um ein Histogramm, das eine Häufigkeit von verschiedenen Kantentypen unter den Block-Kantentypen für die verschiedenen Blöcke beschreibt, zu bestimmen, um das Kanten-Histogramm für das Bild zu erhalten.

9. Vorrichtung gemäß Anspruch 8, wobei der Kanten-Histogramm-Bestimmer ausgelegt ist, um bei der Bestimmung des Block-Kanten-Typs einen Kantentyp, dem eine vergleichsweise große Kantenstärke zugeordnet ist, gegenüber einem Kantentyp, dem eine vergleichsweise kleine Kantenstärke zugeordnet ist, zu bevorzugen, wenn bei den Kantentypen ein gleicher Häufigkeitswert zugeordnet ist.

10. Vorrichtung zum Ablegen eines Bildes in einer Bilddatenbank, mit folgenden Merkmalen:

einer Vorrichtung zum Bestimmen eines Kanten-Histogramms des Bildes, gemäß einem der Ansprüche 1 bis 9; und einer Einrichtung zum Speichern des Bildes und des zugehörigen Kanten-Histogramms in der Bilddatenbank, so dass eine Beziehung zwischen dem Bild und dem zugehörigen Kanten-Histogramm besteht.

**11.** Vorrichtung zum Auffinden von zwei ähnlichen Bildern, mit folgenden Merkmalen:

einem Kanten-Histogramm-Bestimmer, der ausgelegt ist, um ein erstes Kanten-Histogramm für ein erstes Vergleichsbild zu bestimmen, gemäß einem der Ansprüche 1 bis 9;
einer Vorrichtung zum Erhalten eines zweiten Kanten-Histogramms eines zweiten Vergleichsbildes;
einem Ähnlichkeitsinformations-Bestimmer, der ausgelegt ist, um eine Ähnlichkeitsinformation, die eine Ähnlichkeit zwischen einem Bildinhalt des ersten Vergleichsbildes und einem Bildinhalt des zweiten Vergleichsbildes beschreibt, zu erhalten,
wobei der Ähnlichkeitsinformations-Bestimmer ausgelegt ist, um die Ähnlichkeitsinformation basierend auf einem Abstandsmaß zu erhalten,
wobei das Abstandsmaß einen Unterschied zwischen dem ersten Kanten-Histogramm und dem zweiten Kanten-Histogramm beschreibt.

**12.** Verfahren zum Bestimmen eines Kanten-Histogramms (1046; 1052; 1056) eines Bildes (1010), mit folgenden Schritten:

Erhalten (1032, 1034, 1036, 1038) einer Information über eine Gradientenstärke und eine Gradientenrichtung eines lokalen Gradienten in einem Bildinhalt eines Teilbildes des Bildes;
Zuordnen (1040) der Information über die Gradientenstärke und die Gradientenrichtung zu einem Kantentyp basierend auf einer Zuordnungsvorschrift, um eine Kantentyp-Information (1020) zu erhalten,
wobei die Zuordnungsvorschrift so gewählt ist, dass bei einer gegebenen Gradientenrichtung zumindest drei verschiedene zugeordnete Kantentypen existieren, die verschiedene Gradientenstärken widerspiegeln; und
Bestimmen des Kanten-Histogramms basierend auf der Kantentyp-Information, so dass in dem Kantentyp-Histogramm zumindest drei Kantentypen mit verschiedenen zugeordneten Gradientenstärken unterscheidbar sind,
wobei das Zuordnen so durchgeführt wird, dass eine Richtungsauflösung der Zuordnung in Bezug auf die Gradientenrichtung abhängig von der Gradientenstärke ist.

**13.** Verfahren (900) zum Ablegen eines Bildes in einer Bilddatenbank, mit folgenden Schritten:

Bestimmen eines Kanten-Histogramms des Bildes, gemäß Anspruch 12; und
Speichern des Bildes und des zugehörigen Kanten-Histogramms in einer Bilddatenbank, so dass eine Beziehung zwischen dem Bild und dem zugehörigen Kanten-Histogramm besteht.

**14.** Verfahren (950) zum Auffinden von zwei ähnlichen Bildern, mit folgenden Schritten:

Bestimmen (960) eines ersten Kanten-Histogramms für ein erstes Vergleichsbild, gemäß Anspruch 12;
Erhalten (970) eines zweiten Kanten-Histogramms für ein zweites Vergleichsbild;
Bestimmen (980, 990) einer Ähnlichkeitsinformation, die eine Ähnlichkeit zwischen Bildinhalten des ersten Vergleichsbildes und des zweiten Vergleichsbildes beschreibt, wobei die Ähnlichkeitsinformation basierend auf einem Abstandsmaß bestimmt wird, und wobei das Abstandsmaß einen Unterschied zwischen dem ersten Kanten-Histogramm und dem zweiten Kanten-Histogramm beschreibt.

**15.** Computerprogramm zur Durchführung eines Verfahrens gemäß einem der Ansprüche 12 bis 14, wenn das Computerprogramm auf einem Computer abläuft.

**Claims**

**1.** A device for determining an edge histogram (1046; 1052; 1056) of an image (1010) based on information about a gradient strength and a gradient direction of a local gradient in an image content of a partial image of the image, comprising:

an allocator which is implemented to allocate the information on the gradient strength and gradient direction based on an allocation regulation to an edge type to obtain an edge type information (1020),
wherein the allocation regulation is selected so that with a given gradient direction at least three different allocated edge types exist mirroring different gradient strengths; and
an edge histogram determiner which is implemented to determine the edge histogram based on the edge type information so that in the edge type histogram at least three edge types with different allocated gradient strengths may be differentiated,
wherein the allocator is implemented such that a directional resolution of the allocation with regard to the gradient direction is dependent on the gradient strength.

2. The device according to claim 1, wherein the allocator is implemented to differentiate at least three intervals of gradient strengths in the allocation to edge types.

3. The device according to one of claims 1 and 2, wherein the allocator is implemented to allocate information about the gradient strength and the gradient direction independent of the angle to a first edge type ($B_0$) when the gradient strength does not exceed a predetermined first gradient strength threshold value ($t_u$) and to allocate the information about the gradient strength and the gradient direction dependent on the angle to different edge types ($B_5$, $B_6$, $B_7$, $B_8$) when the gradient strength exceeds a predetermined second gradient strength threshold value ($t_o$).

4. The device according to one of the preceding claims, wherein the allocator is implemented such that the directional resolution of the allocation with regard to the gradient direction increases in at least two steps with an increasing gradient strength so that the directional resolution takes on at least three different stages depending on the gradient strength.

5. The device according to one of claims 1 to 4, wherein the allocator is implemented to allocate a first edge type ($B_0$) to the information about the gradient strength and the gradient direction independent of the angle with a low gradient strength which is lower than a first gradient strength threshold value ($t_u$),
to allocate an edge type from a first set of four edge types ($B_1$, $B_2$, $B_3$, $B_4$) to the information about the gradient strength and the gradient direction depending on the gradient direction with an average gradient strength which is greater than the first gradient strength threshold value ($t_u$) and smaller than a second gradient strength threshold value ($t_o$), and
to allocate an edge type from a second set of edge types ($B_5$, $B_6$, $B_7$, $B_8$) to the information about the gradient strength and the gradient direction depending on the gradient direction with a high gradient strength which is greater than the second gradient strength threshold value ($t_o$).

6. The device according to claim 5, wherein the allocator is implemented to differentiate all in all nine edge types, wherein the second set of edge types includes four different edge types.

7. The device according to one of claims 1 to 6, wherein the edge histogram determiner includes a weighted edge histogram determiner which is implemented to determine a weighted edge type frequency information describing an occurrence frequency of different local edge types with respect to an image section which includes a plurality of image parts in order to obtain the edge histogram;
wherein the weighted edge histogram determiner is implemented to weight the occurrence of local edge types in image parts belonging to an extensive edge extending across several image parts higher in the determination of the weighted edge type frequency information than the occurrence of local edge types belonging to isolated local edges.

8. The device according to one of claims 1 to 7, wherein the device is implemented to obtain information about gradient strengths and gradient directions for a plurality of adjacent image parts of the image and to obtain associated information about local edge types for a plurality of adjacent image parts of the image,
wherein the edge histogram determiner is implemented to determine a histogram combining edge type frequency information for several image parts belonging to a first block of image parts and to determine an edge type to which a maximum frequency value is allocated in the histogram as a block edge type for the first block;
wherein the edge histogram determiner is further implemented to determine a respective histogram and a respective block edge type for a plurality of further blocks; and
wherein the edge histogram determiner is further implemented to determine a histogram describing a frequency of different edge types among the block edge types for the different blocks to obtain the edge histogram for the image.

9. The device according to claim 8, wherein the edge histogram determiner is implemented to prefer an edge type to which a comparatively high edge strength is allocated as compared to an edge type to which a comparatively low edge strength is allocated in the determination of the block edge type, when the same frequency value is allocated to the edge types.

**10.** A device for storing an image in an image database, comprising:

a device for determining an edge histogram of the image according to one of claims 1 to 9; and
a means for storing the image and the allocated edge histogram in the image database so that a relationship between the image and the allocated edge histogram exists.

**11.** A device for finding two similar images, comprising:

an edge histogram determiner which is implemented to determine a first edge histogram for a first comparative image according to one of claims 1 to 9;
a device for obtaining a second edge histogram of a second comparative image;
a similarity information determiner which is implemented to obtain similarity information describing a similarity between an image content of the first comparative image and an image content of the second comparative image, wherein the similarity information determiner is implemented to obtain the similarity information based on a distance measure,
wherein the distance measure describes a difference between the first edge histogram and the second edge histogram.

**12.** A method for determining an edge histogram (1046; 1052; 1056) of an image (1010), comprising:

obtaining (1032, 1034, 1036, 1038) information about a gradient strength and a gradient direction of a local gradient in an image content of a partial image of the image;
allocating (1040) information about the gradient strength and the gradient direction to an edge type based on an allocation regulation in order to obtain edge type information (1020),
wherein the allocation regulation is selected such that with a given gradient direction at least three different allocated edge types exist mirroring the different gradient strengths; and
determining the edge histogram based on the edge type information so that in the edge type histogram at least three edge types having different allocated gradient strengths may be differentiated,
wherein allocating is executed so that a directional resolution of the allocation with respect to the gradient direction is dependent on the gradient strength.

**13.** A method (900) for storing an image in an image database, comprising:

determining an edge histogram of the image according to claim 12; and
storing the image and the allocated edge histogram in an image database so that a relationship between the image and the allocated edge histogram exists.

**14.** A method (950) for finding two similar images, comprising:

determining (960) a first edge histogram for a first comparative image according to claim 12;
obtaining (970) a second edge histogram for a second comparative image;
determining (980, 990) similarity information describing a similarity between image contents of the first comparative image and the second comparative image, wherein the similarity information is determined based on a distance measure, and wherein the distance measure describes a difference between the first edge histogram and the second edge histogram.

**15.** A computer program for executing a method according to one of claims 12 to 14 when the computer program is executed on a computer.

**Revendications**

**1.** Dispositif pour déterminer un histogramme de côtés (1046; 1052; 1056) d'une image (1010) sur base d'une information sur une intensité et une direction d'un gradient local dans un contenu d'une image partielle de l'image, aux caractéristiques suivantes:

un associateur qui est conçu pour associer l'information sur l'intensité de gradient et la direction de gradient à un type de côté sur base d'une règle d'association, pour obtenir une information de type de côté (1020),

la règle d'association étant choisie de sorte qu'à une direction de gradient prédéterminée existent au moins trois types de côté différents qui reflètent différentes intensités de gradient; et

un déterminateur d'histogramme de côtés qui est conçu pour déterminer l'histogramme de côtés sur base de l'information de type de côté, de sorte que dans l'histogramme de types de côté puissent être distingués au moins trois types de côté à différentes intensités de gradient associées,

l'associateur étant conçu de sorte qu'une résolution de direction de l'association par rapport à la direction de gradient soit fonction de l'intensité de gradient.

2. Dispositif selon la revendication 1, dans lequel l'associateur est conçu pour distinguer au moins trois intervalles d'intensités de gradient lors de l'association à des types de côté.

3. Dispositif selon l'une des revendications 1 et 2, dans lequel l'associateur est conçu pour associer l'information sur l'intensité de gradient et la direction de gradient indépendamment de l'angle à un premier type de côté ($B_0$) lorsque l'intensité de gradient n'excède pas une première valeur de seuil d'intensité de gradient prédéterminée ($t_u$), et pour associer l'information sur l'intensité de gradient et la direction de gradient en fonction de l'angle à différents types de côté ($B_5$, $B_6$, $B_7$, $B_8$) lorsque l'intensité de gradient excède une deuxième valeur de seuil d'intensité de gradient prédéterminée ($t_o$).

4. Dispositif selon l'une des revendications précédentes, dans lequel l'associateur est conçu de sorte que la résolution de direction de l'association par rapport à la direction de gradient augmente, à intensité de gradient croissante, en au moins deux étapes, de sorte que la résolution de direction adopte, en fonction de l'intensité de gradient, au moins trois étages différentes.

5. Dispositif selon l'une des revendications 1 à 4, dans lequel l'associateur est conçu pour associer, en cas de faible intensité de gradient inférieure à une première valeur de seuil d'intensité de gradient ($t_u$), l'information sur l'intensité de gradient et la direction de gradient indépendamment de l'angle à un premier type de côté ($B_0$),

pour associer, en cas de moyenne intensité de gradient supérieure à la première valeur de seuil d'intensité de gradient ($t_u$) et inférieure à une deuxième valeur de seuil d'intensité de gradient ($t_o$), l'information sur l'intensité de gradient et la direction de gradient en fonction de la direction de gradient à un type de côté parmi un premier ensemble de quatre types de côté ($B_1$, $B_2$, $B_3$, $B_4$), et

pour associer, en cas de haute intensité de gradient supérieure à la deuxième valeur de seuil d'intensité de gradient ($t_o$), l'information sur l'intensité de gradient et la direction de gradient en fonction de la direction de gradient à un type de côté parmi un deuxième ensemble de types de côté ($B_5$, $B_6$, $B_7$, $B_8$).

6. Dispositif selon la revendication 5, dans lequel l'associateur est conçu pour distinguer en tout neuf types de côté, le deuxième ensemble de types de côté comprenant quatre types de côté différents.

7. Dispositif selon l'une des revendications 1 à 6, dans lequel le déterminateur d'histogramme de côtés comporte un déterminateur d'histogramme de côtés de pondération conçu pour déterminer une information de fréquence de type de côté pondérée décrivant une fréquence d'occurrence de différents types de côté locaux pour une découpe d'image comportant une pluralité de parties d'image, pour obtenir l'histogramme de côtés;

le déterminateur d'histogramme de côtés de pondération étant conçu pour, lors de la détermination de l'information de fréquence de type de côté pondérée, pondérer l'occurrence de types de côté locaux dans des parties d'image appartenant à un côté étendu s'étendant sur plusieurs parties d'image de manière plus élevée que l'occurrence de types de côté locaux appartenant à des côtés locaux isolés.

8. Dispositif selon l'une des revendications 1 à 7, dans lequel le dispositif est conçu pour obtenir une information sur les intensités de gradient et les directions de gradient pour une pluralité de parties adjacentes de l'image et une information associée sur les types de côté locaux pour une pluralité de parties adjacentes de l'image,

le déterminateur d'histogramme de côtés étant conçu pour déterminer, comme type de côté de bloc pour le premier bloc, un histogramme regroupant une information de fréquence de type de côté pour plusieurs parties d'image appartenant à un premier bloc de parties d'image, et pour déterminer un type de côté auquel est associée, dans l'histogramme, une valeur de fréquence maximale;

le déterminateur d'histogramme de côtés étant par ailleurs conçu pour déterminer un histogramme respectif et un type de côté de bloc respectif pour une pluralité d'autres blocs; et

le déterminateur d'histogramme de côtés étant par ailleurs conçu pour déterminer un histogramme décrivant une fréquence de différents types de côté parmi les types de côté de bloc pour les différents blocs, pour obtenir l'histogramme de côtés pour l'image.

9.  Dispositif selon la revendication 8, dans lequel le déterminateur d'histogramme de côtés est conçu pour, lors de la détermination du type de côté de bloc, préférer un type de côté auquel est associée une intensité de côté comparativement grande à un type de côté auquel est associée une intensité de côté comparativement petite lorsqu'il est associé pour les types de côté une même valeur de fréquence.

10. Dispositif pour classer une image dans une banque de données d'image, aux caractéristiques suivantes:

    un dispositif pour déterminer un histogramme de côtés de l'image, selon l'une des revendications 1 à 9; et
    un moyen pour mémoriser l'image et l'histogramme de côtés y relatif dans la banque de données d'image, de sorte qu'il existe un rapport entre l'image et l'histogramme de côtés y relatif.

11. Dispositif pour trouver deux images similaires, aux caractéristiques suivantes:

    un déterminateur d'histogramme de côtés conçu pour déterminer un premier histogramme de côtés pour une première image de comparaison, selon l'une des revendications 1 à 9;
    un dispositif pour obtenir un deuxième histogramme de côtés d'une deuxième image de comparaison;
    un déterminateur d'informations de similitude conçu pour obtenir une information de similitude décrivant une similitude entre un contenu d'image de la première image de comparaison et un contenu d'image de la deuxième image de comparaison,
    le déterminateur d'informations de similitude étant conçu pour obtenir l'information de similitude sur base d'une mesure de distance,
    la mesure de distance décrivant une différence entre le premier histogramme de côtés et le deuxième histogramme de côtés.

12. Procédé pour déterminer un histogramme de côtés (1046; 1052; 1056) d'une image (1010), aux étapes suivantes consistant à:

    obtenir (1032, 1034, 1036, 1038) une information sur une intensité et une direction d'un gradient local dans un contenu d'une image partielle de l'image;
    associer (1040) l'information sur l'intensité de gradient et la direction de gradient à un type de côté sur base d'une règle d'association, pour obtenir une information de type de côté (1020),
    la règle d'association étant choisie de sorte qu'à une direction de gradient prédéterminée existent au moins trois types de côté différents qui reflètent différentes intensités de gradient; et
    déterminer l'histogramme de côtés sur base de l'information de type de côté, de sorte que dans l'histogramme de types de côté puissent être distingués au moins trois types de côté à différentes intensités de gradient associées,
    l'association étant effectuée de sorte qu'une résolution de direction de l'association par rapport à la direction de gradient soit fonction de l'intensité de gradient.

13. Procédé (900) pour classer une image dans une banque de données d'image, aux étapes suivantes consistant à:

    déterminer un histogramme de côtés de l'image, selon la revendication 12; et
    mémoriser l'image et l'histogramme de côtés y relatif dans une banque de données d'image, de sorte qu'il existe un rapport entre l'image et l'histogramme de côtés y relatif.

14. Procédé (950) pour trouver deux images similaires, aux étapes suivantes consistant à:

    déterminer (960) un premier histogramme de côtés pour une première image de comparaison, selon la revendication 12;
    obtenir (970) un deuxième histogramme de côtés pour une deuxième image de comparaison;
    déterminer (980, 990) une information de similitude décrivant une similitude entre les contenus d'image de la première image de comparaison et de la deuxième image de comparaison, l'information de similitude étant déterminée sur base d'une mesure de distance, et la mesure de distance décrivant une différence entre le premier histogramme de côtés et le deuxième histogramme de côtés.

15. Programme d'ordinateur pour réaliser un procédé selon l'une des revendications 12 à 14 lorsque le programme d'ordinateur est exécuté sur un ordinateur.

**FIG 1A**   ↓1000      Bild
                              ⌐1010

| |
|---|
| 1032 — Berechnen eines horizontalen Gradienten im Bezug auf Intensitätswerte für einen Bildteil des Bildes |

| |
|---|
| 1034 — Berechnen eines vertikalen Gradienten im Bezug auf Intensitätswerte für den Bildteil |

| |
|---|
| 1036 — Berechnen einer Gradientenstärke für den Bildteil aus dem horizontalen und vertikalen Gradienten |

| |
|---|
| 1038 — Berechnen einer Gradientenrichtung für den Bildteil aus dem horizontalen und vertikalen Gradienten |

Information über Gradientenstärke
und Gradientenrichtung

| |
|---|
| 1040 — Bestimmen eines lokalen Kantentypen, der dem Bildteil zugeordnet ist, basierend auf der Gradientenstärke und der Gradientenrichtung, unter Verwendung einer Zuordnungsvorschrift |

⌐1020

lokaler Kantentyp für einen Bildteil

Information über lokale Kantentypen
für eine Mehrzahl von Bildteilen

↓ ~1044

1042~

Bestimmen einer gewichteten Kantentyp-
Häufigkeits-Information, die eine Auftretens-
Häufigkeit von verschiedenen lokalen Kantentypen
beschreibt, für einen Bildausschnitt, der eine Mehrzahl
von Bildteilen umfasst,
wobei das Auftreten lokaler Kantentypen in Bildteilen,
die zu einer sich über mehrere Bildteile erstreckenden
ausgedehnten Kante gehören, höher gewichtet werden
als das Auftreten lokaler Kantentypen von isolierten
lokalen Kanten

↓ ~1046

gewichtete Kantentyp-Häufigkeits-Information
für einem Bildausschnitt

# FIG 1B

gewichtete Kantentyp-Häufigkeits-Information
für einen Block von Bildteilen = Bildausschnitt

1048 — Bestimmen einen Kantentypen, dem ein maximaler
Häufigkeitswert zugeordnet ist, als Block-Kantentyp

Block-Kantentyp
für einen Block

Block-Kantentypen
für mehrere weitere
Blöcke

1050 — Bestimmen eines Gruppen-Histogramms, das eine
Häufigkeit von verschiedenen Kantentypen unter den
Block-Kanten-Typen für die zu der Gruppe gehörigen
Blöcke beschriebt

1052

Gruppen-Histogramm
für eine Gruppe von Blöcken

## FIG 1C

Gruppen-Histogramm
für eine Gruppen von
Blöcken

Gruppen-Histogramme
für eine oder mehrere
weitere Gruppen von
Blöcken

1052

1052

1054

Zusammenfassen der Gruppen-Histogramme
zu einem gemeinsamen Histogramm

1056

gemeinsames Histogramm

FIG 1D

FIG 2A

FIG 2B

FIG 3

FIG 4

FIG 5A

vertikale Richtung

305

201

504a    504b    504c    504d

104

400

| $B_2$ | $B_4$ | $B_0$ | $B_1$ | $B_1$ |
|---|---|---|---|---|
| 1 | 1 | 1 | 1 | 1 |
| $B_5$ | $B_5$ | $B_5$ | $B_5$ | $B_5$ |
| 1 | 2 | 2 | 2 | 1 |
| $B_6$ | $B_5$ | $B_5$ | $B_5$ | $B_5$ |
| 1 | 1 | 2 | 2 | 1 |
| $B_0$ | $B_6$ | $B_0$ | $B_0$ | $B_1$ |
| 1 | 2 | 1 | 1 | 1 |
| $B_7$ | $B_6$ | $B_6$ | $B_3$ | $B_8$ |
| 1 | 1 | 1 | 1 | 1 |

504e

504f
504g

506a

506b

506c

402

14

horizontale Richtung

508

509b

4    3

401

1    1    1    5

1    1

$B_0$    $B_1$    $B_2$    $B_3$    $B_4$    $B_5$    $B_6$    $B_7$    $B_8$

509d    509f    509h    509j    509l    509a

509e    509j    509i    509k

36

FIG 5B

FIG 6

FIG 7

EP 2 140 403 B1

FIG 8

900

910 ⌐ | Bestimmen eines Kanten-Histogramms eines Bildes |

920 ⌐ | Speichern des Bildes und des zugehörigen Kanten-Histogramms in einer Bilddatenbank, so dass eine Beziehung zwischen dem Bild und dem zugehörigen Kanten-Histogramm besteht |

FIG 9A

950

```
Bestimmen eines ersten Kanten-Histogramms
für ein erstes Vergleichsbild                         960
```

```
Erhalten eines zweiten Kanten-Histogramms
für ein zweites Vergleichsbild                        970        972
```

```
Bestimmen eines Abstandsmaßes, das einen
Unterschied zwischen dem ersten Kanten-
Histogramm und dem zweiten Kanten-
Histogramm beschreibt                                 980
```

982

```
Bestimmen einer Ähnlichkeitsinformation
basierend auf dem Abstandsmaß                         990
```

FIG 9B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6807298 B1

- WO 0141071 A1

**In der Beschreibung aufgeführte Nicht-Patentliteratur**

- **H.C. Shen ; C.Y.C. Bie.** Feature frequency matrices as texture image representation. *Pattern Recognition Letters,* Marz 1992, vol. 13 (3